(19)

**Europäisches Patentamt**
**European Patent Office**
**Office européen des brevets**

(11)   **EP 4 668 637 A1**

(12)   **EUROPEAN PATENT APPLICATION**
published in accordance with Art. 153(4) EPC

(43) Date of publication:
**24.12.2025  Bulletin 2025/52**

(21) Application number: **23921986.8**

(22) Date of filing: **17.02.2023**

(51) International Patent Classification (IPC):
**H04L 5/00** (2006.01)        **H04W 24/10** (2009.01)

(52) Cooperative Patent Classification (CPC):
**H04L 5/00; H04W 24/10**

(86) International application number:
**PCT/CN2023/076849**

(87) International publication number:
**WO 2024/168837 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventors:
• **LU, Yiwen**
  **Beijing 100022 (CN)**
• **ZHANG, Jian**
  **Beijing 100022 (CN)**
• **ZHANG, Lei**
  **Beijing 100022 (CN)**
• **WANG, Xin**
  **Beijing 100022 (CN)**

(74) Representative: **Haseltine Lake Kempner LLP**
**Cheapside House**
**138 Cheapside**
**London EC2V 6BJ (GB)**

(54)   **METHOD AND APPARATUS FOR SENDING CHANNEL STATE INFORMATION, METHOD AND APPARATUS FOR RECEIVING CHANNEL STATE INFORMATION, AND COMMUNICATION SYSTEM**

(57)   Embodiments of this disclosure provide methods and apparatuses for transmitting and receiving channel state information and a communication system. The apparatus is applicable to a terminal equipment and includes: a first receiver configured to receive first channel state information reference signal (CSI-RS) resource configuration transmitted by a network device, the first CSI-RS resource configuration at least comprising a first resource set, the first resource set comprising K CSI-RS resources, where, K is a natural number greater than or equal to 2; and a first processor configured to determine a CSI reporting priority at least based on grouping information of reporting domain information of channel state information part II (CSI part II), the grouping information being determined based on M CSI-RS resources related to the K CSI-RS resources, where M is a natural number less than or equal to K, wherein the first processor generates CSI at least according to the CSI reporting priority.

600

**Apparatus for transmitting channel state information**

601

**First receiver**

602

**First processor**

603

**First transmitter**

**FIG. 6**

EP 4 668 637 A1

**Description**

Technical Field

This disclosure relates to the field of communication technologies.

Background

In a New Radio (NR) system, users may measure a current channel according to channel state information (CSI) resource settings and CSI reporting settings configured by a network device side, and carry the channel state information by uplink control information (UCI) in an uplink channel (such as a physical uplink control channel PUCCH, a physical uplink shared channel PUSCH) for reporting feedback.

The multiple transmission reception point (M-TRP) cooperative transmission scheme is an important technology in NR systems to improve the throughput of cell edge usage and provide more balanced service quality for serving cells. The M-TRP transmission scheme can be roughly divided into two types: a coherent joint transmission (C-JT) scheme and an incoherent joint transmission (NC-JT) scheme. The specific implementation difference between the two is reflected in the different mapping relationships from layers to multiple TRPs. For the C-JT scheme, all physical downlink shared channel/demodulation reference signals (PDSCH/DMRS) ports jointly transmitted from multiple transmission points (TRPs) and signals from multiple TRPs are coherently transmitted; For the NC-JT scheme, the PDSCH/DMRS ports are transmitted separately from each TRP.

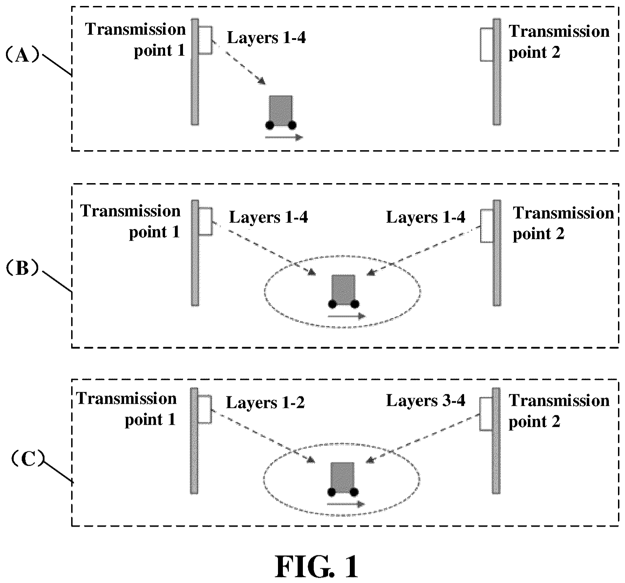

FIG. 1 is a schematic diagram of single point transmission, coherent joint transmission and incoherent joint transmission. A in FIG. 1 corresponds to single point transmission, B in FIG. 1 corresponds to C-JT transmission, and C in FIG. 1 corresponds to NC-JT.

In Rel-15/16, users report CSI based on the single transmission reception point (S-TRP) scheme, which includes precoding matrix indication (PMI), rank indicator (RI), layer indication (LI), channel quality indication (CQI), etc. Rel-17 supports enhanced CSI resource allocation and reporting for NC-JT scheme. Terminal devices can perform joint channel measurements based on reference signals transmitted from M transmission points based on NC-JT transmission, and report M PMIs, M RIs, M LIs, and N CQIs (single codeword N=1, double codeword N=2), etc. And currently only supports CSI reporting based on the 'typeI single-panel' codebook configuration.

When coherent joint transmission occurs, each data layer is mapped onto multiple TRP/panels participating in cooperation through weighted vectors, which is equivalent to concatenating multiple sub-arrays into a higher dimensional virtual array. Therefore, the C-JT transmission scheme can achieve higher shaping/precoding/multiplexing gains and significantly improve the throughput of edge users and the average throughput of the cell.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

According to the data/reference signal transmission and mapping characteristics in the CJT transmission scheme, the terminal equipment needs to perform joint channel measurement based on the reference signals transmitted by K multiple transmission points based on C-JT transmission, and jointly feedback single CSI information such as PMI, RI, LI, CQI, etc.

However, the current CSI feedback mechanism of Rel-15~Rel-17 standards cannot be applied to the CSI feedback of C-JT transmission schemes. That is, the CSI feedback from terminal devices cannot accurately and completely reflect the true channel quality experienced by the resource ports of C-JT, thereby reducing the accuracy and reliability of data scheduling, resulting in a decrease in data transmission performance, single user, and overall network throughput.

For example, part I reporting domain information and bitwidth in a CSI reporting field based on CJT joint transmission are not specified in the related art. Therefore, a network device is unable to accurately receive and demodulate part I information based on a joint coherent transmission scheme. For another example, when the terminal equipment receives all Part I information based on a joint coherent transmission scheme, as no Part I information reporting priority is defined, when a bit rate is greater than a configured maximum bit rate, the network device is unable to define determination of information omission according to the priority, resulting in that a part of information of CSI is unable to be correctly received and demodulated, which greatly affects accuracy and completeness of measurement reporting, and is unable to ensure data transmission performances.

In order to solve at least one of the above problems or other similar problems, embodiments of this disclosure provide methods and apparatuses for transmitting and receiving channel state information and a communication system, in which grouping information of reporting domain information of channel state information part II (CSI part II) is determined based on M CSI-RS resources related to the K CSI-RS resources, and then a CSI reporting priority is determined at least based on the grouping information. Hence, the network device is able to correctly receive and demodulate the received CSI, thereby improving accuracy and completeness of the measurement report, and ensuring data transmission performance.

According to one aspect of the embodiments of this disclosure, there is provided an apparatus for transmitting channel state information, applicable to a terminal equipment, the apparatus including:

a first receiver configured to receive first channel state information reference signal (CSI-RS) resource configuration transmitted by a network device, the first CSI-RS resource configuration at least including a first resource set, the first resource set including K CSI-RS resources, where, K is a natural number greater than or equal to 2; and
a first processor configured to determine a CSI reporting priority at least based on grouping information of reporting domain information of channel state information part II (CSI part II), the grouping information being determined based on M CSI-RS resources related to the K CSI-RS resources, where, M is a natural number less than or equal to K, wherein the first processor generates CSI at least according to the CSI reporting priority.

According to another aspect of the embodiments of this disclosure, there is provided an apparatus for receiving channel state information, applicable to a network device, the apparatus including:

a second transmitter configured to transmit first channel state information reference signal (CSI-RS) resource configuration to a terminal equipment, the first CSI-RS resource configuration at least including a first resource set, the first resource set including K CSI-RS resources, where, K is a natural number greater than or equal to 2; and
a second receiver configured to receive CSI from the terminal equipment, the CSI being generated according to a CSI reporting priority,
wherein the CSI reporting priority is determined at least based on grouping information of reporting domain information of channel state information part II (CSI part II), the grouping information being determined based on M CSI-RS resources related to the K CSI-RS resources, where, M is a natural number less than or equal to K.

An advantage of the embodiments of this disclosure exists in that the grouping information of reporting domain information of channel state information part II (CSI part II) is determined based on M CSI-RS resources related to the K CSI-RS resources, and then a CSI reporting priority is determined at least based on the grouping information; hence, the network device is able to correctly receive and demodulate the received CSI, thereby improving accuracy and completeness of the measurement report, and ensuring data transmission performance.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiments.

FIG. 1 is a schematic diagram of single point transmission, coherent joint transmission and incoherent joint transmission;
FIG. 2 is a schematic diagram of a communication system of this disclosure;
FIG. 3 is a schematic diagram of decoupling by an NR system according to CSI measurement and CSI feedback;
FIG. 4 is a schematic diagram of the method for transmitting channel state information of the first aspect of this disclosure;
FIG. 5 is a schematic diagram of the method for receiving channel state information of the second aspect of this disclosure;

FIG. 6 is a schematic diagram of the apparatus for transmitting channel state information of the third aspect of this disclosure;

FIG. 7 is a schematic diagram of the apparatus for receiving channel state information of the fourth aspect of this disclosure;

FIG. 8 is a schematic diagram of the terminal equipment of embodiments of the fifth aspect of this disclosure; and

FIG. 9 is a schematic diagram of the network device of embodiments of the fifth aspect of this disclosure.

Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and new radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: an integrated Access and Backhaul Node (IAB-node), a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above.

In the following description, without causing confusion, the terms "uplink control signal" and "uplink control information (UCI)" or "physical uplink control channel (PUCCH)" may be replaced with each other, and terms "uplink data signal" and "uplink data information" or "physical uplink shared channel (PUSCH)" may be replaced with each other.

The terms "downlink control signal" and "downlink control information (DCI)" or "physical downlink control channel (PDCCH)" may be replaced with each other, and the terms "downlink data signal" and "downlink data information" or "physical downlink shared channel (PDSCH)" may be replaced with each other.

In addition, transmitting or receiving a PUSCH may be understood as transmitting or receiving uplink data carried by the PUSCH, transmitting or receiving a PUCCH may be understood as transmitting or receiving uplink information carried by the PUCCH, transmitting or receiving a PRACH may be understood as transmitting or receiving a preamble carried by the PRACH. The uplink signal may include an uplink data signal and/or an uplink control signal, etc., and may be referred to as uplink transmission or uplink information or an uplink channel. Transmitting uplink transmission on an uplink resource may be understood as transmitting the uplink transmission by using the uplink resource. Likewise, downlink data/signal/channel/information may be understood correspondingly.

In the embodiments of this disclosure, higher-layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

Scenarios in the embodiments of this disclosure shall be described below by way of examples; however, this disclosure is not limited thereto.

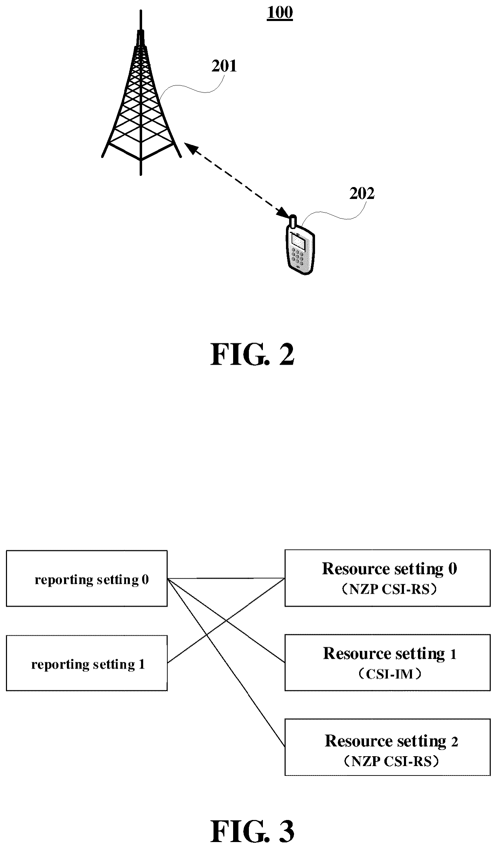

FIG. 2 is a schematic diagram of a communication system of this disclosure, in which a case where a terminal equipment and a network device are taken as examples is schematically shown. As shown in FIG. 2, the communication system 100 may include a network device 201 and a terminal equipment 202 (for the sake of simplicity, an example having only one terminal equipment is schematically given in FIG. 2).

In the embodiment of this disclosure, existing traffics or traffics that may be implemented in the future may be performed between the network device 201 and the terminal equipment 202. For example, such traffics may include but not limited to enhanced mobile broadband (eMBB), massive machine type communication (MTC), and ultra-reliable and low-latency communication (URLLC), etc.

The terminal equipment 202 may transmit data to the network device 201, such as in a grant or grant-free manner. The network device 201 may receive data transmitted by one or more terminal equipments 202, and feed back information to the terminal equipment 202, such as acknowledgement (ACK)/non-acknowledgement (NACK) information, and the terminal equipment 202 may acknowledge to terminate a transmission process, or may perform transmission of new data, or may perform data retransmission.

In the embodiments of this disclosure, reporting may refer to an action of transmitting information by the terminal equipment to the network device. For example, reporting CSI by the terminal equipment may refer to transmitting CSI by the terminal equipment to the network device.

FIG. 3 is a schematic diagram of decoupling by an NR system according to CSI measurement and CSI feedback. As shown in FIG. 3, each terminal equipment may configure N (N≥1) reporting settings and M (M≥1) resource settings. Each reporting setting is associated with at least one resource setting for channel measurement and interference measurement. For each bandwidth part (BWP), N≤12, M≤ 28.

The CSI resource settings are used for interference measurement (CSI-IM/NZP CSI-RS) and CSI acquisition (NZP CSI-RS). Each resource setting contains S resource sets, each resource set containing Ks CSI-RS resources.

A mode of CSI reporting is configured as one of AP, P, or SP, wherein the AP mode may include one or more resource sets. When modes P and SP are used for CSI acquisition, only one resource set may be included.

The CSI reporting settings are used to set a CSI report quantity, a CSI type (Type I or Type II), codebook parameter configuration, a CSI reporting time-domain behavior, frequency domain granularities, measurement constraint configurations and CSI reporting frequency bands of a precoding matrix indicator (PMI) and a channel quality indicator (CQI).

The CSI report quantity supported by NR includes: 'none', 'cri-RI-PMI-CQI', 'cri-RI-i1', 'cri-RI-i1-CQI', 'cri-RI-CQI', 'cri-RSRP', 'cri-SINR', 'ssb-Index-RSRP', 'ssb-Index-SINR' or 'cri-RI-LI-PMI-CQI', etc.

The CSI type includes: 'typeI Single-Panel', 'typeI Multi-Panel', 'typeII', 'typeII-PortSelection', 'typeII-r16', 'typeII-PortSelection-r16', 'typeII-PortSelection-r17', etc.

In CSI report based on 'typeII-r16' and 'typeII-PortSelection-r17', only broadband parameter information may only be reported via a physical uplink control channel (PUCCH); and if there exists sub-band codebook parameter information, it may only be reported via a physical uplink shared channel (PUSCH), and part I and part II are included therein, as shown in Table 1 below.

Table 1

| Part I | Part II |
|---|---|
| ● RI (if reported)<br>● CQI<br>● indication of the overall number of non-zero amplitude coefficients across layers<br>3 elements are separately encoded | ● PMI |

In the report based on 'typeII-r16' CSI, the precoding matrix indicator (PMI) W may be represented by W1, W2 and Wf.

The terminal equipment needs to report L W1 spatial domain basis vectors and Mv Wf frequency domain basis vectors, and calculates a combining coefficient W2 according to the selected SD-FD, which is composed of amplitude/-phase coefficients. Therefore, Part II information can be divided into information fields X1 and X2, specifically,

1) information fields $X_1$: including SD selection beams and a strongest coefficient indicator (SCI)

a) selection beams $i_{1,1}, i_{1,2}$: W1 is divided into N1N2O1O2 beams, and all the beams are first divided into (O1O2) blocks, the terminal equipment first selects an optimal block, each block containing N1N2 beams, and then selects L optimal beams $i_{1,2}$.

b) strongest coefficient indicator: according to a maximum number $K^0$ of non-zero coefficients configured by the network device, the terminal needs to report an actual number $K^{NZ}$ of non-zero coefficients. For layer 1, the number is equal to a total actually measured non-zero number, hence, indication overhead of the maximum non-zero coefficient is $\lceil \log_2(K^{NZ}) \rceil$. For layers 2, 3 and 4, a reporting indication of $\lceil \log_2(2L) \rceil$ is used.

2) Information fields $X_2$: including FD basis vectors, amplitude/phase coefficient indicators, and bitmap indicators.

a) non-zero coefficient indicator (bitmap indicator): non-zero coefficient indicator adopts a most direct scheme; each layer being indicated by using a bitmap of 2LM bits.

b) FD basis vector indicators $i_{1,5}, i_{1,6,l}$: Mv basis vectors are selected in N3, and the frequency domain basis vectors are cyclically shifted to enable a first frequency domain basis vector (corresponding to a strongest coefficient) to be necessarily selected, hence, the remaining basis vectors are obtained from N3-1 candidate basis vectors, and feedback overhead is $\left\lceil \log_2 \binom{N_3 - 1}{M_l - 1} \right\rceil$.

i. when N3 >= 19, after the SCI is reported, Mv-1 candidate basis vectors obtained from N3-1 candidate basis vectors other than those corresponding to the SCI are reported.

ii. when N3 > 19, intermediate basis vector sets N3' are selected from N3 first, and a window starting point M_initial of the new set N3' is defined, the starting point being to search for an optimal starting point one by one from N3'.

(i) the number of the intermediate basis vector sets: N3' = a*Mv(per layer); where, a is a predefined constant equal to 2.

(ii) an interval of the intermediate basis vector sets: (M_initial + n, N3), n = 0,1, ..., $N3'$ - 1; where, M_initial $\in$ {-(N3' -1), -(N3' -2) ,..., -1,0}.

c) W2 amplitude indicators $i_{2,3,l}$, $i_{2,4,l}$:

i. $i_{2,3,l}$ reference amplitude coefficient, overhead is fixed to 4 bits.

ii. $i_{2,4,l}$ differential amplitude coefficient, with the strongest coefficient SCI quantized to 1. The overhead is 3($K^{NZ}$ - l) 13bit*(the number of non-zero coefficients of all layers-the number of maximum coefficients of all layers)}, wherein the differential amplitude coefficient refers to relative differential quantization of all non-zero coefficients for broadband amplitude coefficients.

iii. W2 phase indicator $i_{2,5,l}$: 16PSK quantization is fixedly adopted, with the strongest coefficient SCI quantized to 1, and overhead is 4($K^{NZ}$ - l) {4bit*(the number of non-zero coefficients of all layers-the number of maximum coefficients of all layers)}.

Bitwidths of the information fields $X_1$ and $X_2$ are as shown in Table 2 below.

Table 2

Table 6.3.2.1.2-1A: PMI of *codebookType= typeII-r16*

| | Information fields $X_1$ | | | | | |
|---|---|---|---|---|---|---|
| | $i_{1,1}$ | $i_{1,2}$ | $i_{1,8,1}$ | $i_{1,8,2}$ | $i_{1,8,3}$ | $i_{1,8,4}$ |

| | | | | | | |
|---|---|---|---|---|---|---|
| Rank=1 $N_3 \leq 19$ | $\lceil \log_2(O_1 O_2) \rceil$ | $\left\lceil \log_2 \binom{N_1 N_2}{L} \right\rceil$ | $\lceil \log_2 K^{NZ} \rceil$ | N/A | N/A | N/A |
| Rank=2 $N_3 \leq 19$ | $\lceil \log_2(O_1 O_2) \rceil$ | $\left\lceil \log_2 \binom{N_1 N_2}{L} \right\rceil$ | $\lceil \log_2(2L) \rceil$ | $\lceil \log_2(2L) \rceil$ | N/A | N/A |
| Rank=3 $N_3 \leq 19$ | $\lceil \log_2(O_1 O_2) \rceil$ | $\left\lceil \log_2 \binom{N_1 N_2}{L} \right\rceil$ | $\lceil \log_2(2L) \rceil$ | $\lceil \log_2(2L) \rceil$ | $\lceil \log_2(2L) \rceil$ | N/A |
| Rank=4 $N_3 \leq 19$ | $\lceil \log_2(O_1 O_2) \rceil$ | $\left\lceil \log_2 \binom{N_1 N_2}{L} \right\rceil$ | $\lceil \log_2(2L) \rceil$ | $\lceil \log_2(2L) \rceil$ | $\lceil \log_2(2L) \rceil$ | $\lceil \log_2(2L) \rceil$ |
| Rank=1 $N_3 > 19$ | $\lceil \log_2(O_1 O_2) \rceil$ | $\left\lceil \log_2 \binom{N_1 N_2}{L} \right\rceil$ | $\lceil \log_2 K^{NZ} \rceil$ | N/A | N/A | N/A |
| Rank=2 $N_3 > 19$ | $\lceil \log_2(O_1 O_2) \rceil$ | $\left\lceil \log_2 \binom{N_1 N_2}{L} \right\rceil$ | $\lceil \log_2(2L) \rceil$ | $\lceil \log_2(2L) \rceil$ | N/A | N/A |
| Rank=3 $N_3 > 19$ | $\lceil \log_2(O_1 O_2) \rceil$ | $\left\lceil \log_2 \binom{N_1 N_2}{L} \right\rceil$ | $\lceil \log_2(2L) \rceil$ | $\lceil \log_2(2L) \rceil$ | $\lceil \log_2(2L) \rceil$ | N/A |
| Rank=4 $N_3 > 19$ | $\lceil \log_2(O_1 O_2) \rceil$ | $\left\lceil \log_2 \binom{N_1 N_2}{L} \right\rceil$ | $\lceil \log_2(2L) \rceil$ | $\lceil \log_2(2L) \rceil$ | $\lceil \log_2(2L) \rceil$ | $\lceil \log_2(2L) \rceil$ |

| | Information fields $X_2$ | | | | | | | | | | | |
|---|---|---|---|---|---|---|---|---|---|---|---|---|
| | $i_{2,3,1}$ | $i_{2,3,2}$ | $i_{2,3,3}$ | $i_{2,3,4}$ | $i_{1,5}$ | $i_{1,6,1}$ | $i_{1,6,2}$ | $i_{1,6,3}$ | $i_{1,6,4}$ | $\{i_{2,4,l}\}_{l=1,\ldots}$ | $\{i_{2,5,l}\}_{l=1,\ldots}$ | $\{i_{1,7,l}\}_{l=1,\ldots}$ |
| Rank =1 $N_3 \leq 19$ | 4 | N/A | N/A | N/A | N/A | $\left\lceil \log_2 \binom{N_3-1}{M_1-1} \right\rceil$ | N/A | N/A | N/A | $3(K^{NZ}-1)$ | $4(K^{NZ}-1)$ | $2LM_1$ |
| Rank =2 $N_3 \leq 19$ | 4 | 4 | N/A | N/A | N/A | $\left\lceil \log_2 \binom{N_3-1}{M_2-1} \right\rceil$ | $\left\lceil \log_2 \binom{N_3-1}{M_2-1} \right\rceil$ | N/A | N/A | $3(K^{NZ}-2)$ | $4(K^{NZ}-2)$ | $4LM_2$ |
| Rank =3 $N_3 \leq 19$ | 4 | 4 | 4 | N/A | N/A | $\left\lceil \log_2 \binom{N_3-1}{M_3-1} \right\rceil$ | $\left\lceil \log_2 \binom{N_3-1}{M_3-1} \right\rceil$ | $\left\lceil \log_2 \binom{N_3-1}{M_3-1} \right\rceil$ | N/A | $3(K^{NZ}-3)$ | $4(K^{NZ}-3)$ | $6LM_3$ |

| | | | | | | | | | | | | |
|---|---|---|---|---|---|---|---|---|---|---|---|---|
| Rank =4 $N_3 \leq 19$ | 4 | 4 | 4 | 4 | N/A | $\lceil \log_2 \binom{N_3-1}{M_4-1} \rceil$ | $\lceil \log_2 \binom{N_3-1}{M_4-1} \rceil$ | $\lceil \log_2 \binom{N_3-1}{M_4-1} \rceil$ | $\lceil \log_2 \binom{N_3-1}{M_4-1} \rceil$ | $3(K^{NZ}-4)$ | $4(K^{NZ}-4)$ | $8LM_4$ |
| Rank =1 $N_3 > 19$ | 4 | N/A | N/A | N/A | $\lceil \log_2(2M_1) \rceil$ | $\lceil \log_2 \binom{2M_1-1}{M_1-1} \rceil$ | N/A | N/A | N/A | $3(K^{NZ}-1)$ | $4(K^{NZ}-1)$ | $2LM_1$ |
| Rank =2 $N_3 > 19$ | 4 | 4 | N/A | N/A | $\lceil \log_2(2M_2) \rceil$ | $\lceil \log_2 \binom{2M_2-1}{M_2-1} \rceil$ | $\lceil \log_2 \binom{2M_2-}{M_2-} \rceil$ | N/A | N/A | $3(K^{NZ}-2)$ | $4(K^{NZ}-2)$ | $4LM_2$ |
| Rank =3 $N_3 > 19$ | 4 | 4 | 4 | N/A | $\lceil \log_2(2M_3) \rceil$ | $\lceil \log_2 \binom{2M_3-1}{M_3-1} \rceil$ | $\lceil \log_2 \binom{2M_3-}{M_3-} \rceil$ | $\lceil \log_2 \binom{2M_3-1}{M_3-1} \rceil$ | N/A | $3(K^{NZ}-3)$ | $4(K^{NZ}-3)$ | $6LM_3$ |
| Rank =4 $N_3 > 19$ | 4 | 4 | 4 | 4 | $\lceil \log_2(2M_4) \rceil$ | $\lceil \log_2 \binom{2M_4-1}{M_4-1} \rceil$ | $\lceil \log_2 \binom{2M_4-}{M_4-} \rceil$ | $\lceil \log_2 \binom{2M_4-1}{M_4-1} \rceil$ | $\lceil \log_2 \binom{2M_4-1}{M_4-1} \rceil$ | $3(K^{NZ} 4)$ | $4(K^{NZ} 4)$ | $8LM_4$ |

In the CSI report based on 'typeII-r16', the Part II information is grouped as G0, G1, and G2, information contained in each group being as follows:

G0 (Group 0): SD selection beams $i_{1,1}, i_{1,2}$, strongest coefficient indicators $i_{1,8,l}$, (information fields $X_1$)

G1 (Group 1): FD basis vector indicators $i_{1,5}, i_{1,6,l}$, the $v2LM_v - \lfloor K^{NZ}/2 \rfloor$ highest priority elements of $i_{1,7,l}$ (high-priority non-zero coefficient bitmap), $i_{2,3,l}$ (reference combining coefficient), the $\max\left(0, \left\lceil \frac{K^{NZ}}{2} \right\rceil - v\right)$ highest priority elements of $i_{2,4,l}$ (strongly polarized differential amplitude combining coefficients) and the $\max\left(0, \left\lceil \frac{K^{NZ}}{2} \right\rceil - v\right)$ highest priority elements of $i_{2,5,l}$ ($l = 1, ..., v$) (strongly polarized phase combining coefficients);

The priorities are determined by the following equation:

$$\mathrm{Pri}(l, i, f) = 2 \cdot L \cdot v \cdot \pi(f) + v \cdot i + l \quad ,$$

with $\pi(f) = \min\left(2 \cdot n_{3,l}^{(f)}, 2 \cdot \left(N_3 - n_{3,l}^{(f)}\right) - 1\right)$ with $l = 1, 2, ..., v$, $i = 0, 1, ..., 2L - 1$, and $f = 0, 1, ..., M_v - 1$;

G2 (Group 2): the $\lfloor K^{NZ}/2 \rfloor$ lowest priority elements of $i_{1,7,l}$ (low-priority non-zero coefficient bitmap), the

$$\min\left(K^{NZ} - v, \left\lfloor \frac{K^{NZ}}{2} \right\rfloor\right)$$ lowest priority elements of $i_{2,4,l}$ (weakly polarized differential amplitude combining coefficient) and the $$\min\left(K^{NZ} - v, \left\lfloor \frac{K^{NZ}}{2} \right\rfloor\right)$$ lowest priority elements of $i_{2,5,l}$ ($l$ = 1, ..., $v$) (weakly polarized differential phase combining coefficients)

In the CSI report based on 'typeII-r16'ing, after the Part II information is grouped, it is reported according to grouping priorities, such as omitting the CSI report starting from a lowest priority, until a CSI report code rate<=a code rate configured by a higher-layer parameter (such as maxCodeRate). The grouping priorities may be as shown in Table 3 below.

Table 3

| Table 5.2.3-1: Priority reporting levels for Part 2 CSI |
|---|
| Priority 0:<br>For CSI reports 1 to $N_{Rep}$, Group 0 CSI for CSI reports configured as 'typeII-r16' or 'typeII-PortSelection-r16'; Part 2 wideband CSI for CSI reports configured otherwise |
| Priority 1:<br>Group 1 CSI for CSI report 1, if configured as 'typeII-r16' or 'typeII-PortSelection-r16'; Part 2 subband CSI of even subbands for CSI report 1, if configured otherwise |
| Priority 2:<br>Group 2 CSI for CSI report 1, if configured as 'typeII-r16' or 'typeII-PortSelection-r16'; Part 2 subband CSI of odd subbands for CSI report 1, if configured otherwise |
| Priority 3:<br>Group 1 CSI for CSI report 2, if configured as 'typeII-r16' or 'typeII-PortSelection-r16'; Part 2 subband CSI of even subbands for CSI report 2, if configured otherwise |
| Priority 4:<br>Group 2 CSI for CSI report 2, if configured as 'typeII-r16' or 'typeII-PortSelection-r16'. Part 2 subband CSI of odd subbands for CSI report 2, if configured otherwise |
| ⋮ |
| Priority $2N_{Rep}$ - 1:<br>Group 1 CSI for CSI report $N_{Rep}$, if configured as 'typeII-r16' or 'typeII-PortSelection-r16'; Part 2 subband CSI of even subbands for CSI report $N_{Rep}$, if configured otherwise |
| Priority $2N_{Rep}$:<br>Group 2 CSI for CSI report $N_{Rep}$, if configured as 'typeII-r16' or 'typeII-PortSelection-r16'; Part 2 subband CSI of odd subbands for CSI report $N_{Rep}$, if configured otherwise |

In the following embodiments of this disclosure, the omitting at least a part of CSI may also be referred to as omitting at least a part of CSI or discarding at least a part of CSI, that is, ignoring, omitting and discarding may be replaced with each other, and these three words may all correspond to omit.

In the following embodiments of this disclosure, uppercase letter K has the same meaning as uppercase letter k.

Embodiments of a first aspect

In the related art, for example, in the current uplink control information (UCI) report based on 'typeII-r16' and 'typeII-PortSelection-r17', part II reporting domain information and bitwidth in a CSI reporting field based on CJT joint transmission are not specified, hence, the network device is unable to accurately receive and demodulate the part II information based on the joint coherent transmission scheme. In addition, when the terminal equipment receives all part II information based on the joint coherent transmission scheme, if a part II information reporting priority is not currently defined and a code rate is greater than a configured highest code rate, the network device is unable to omit information according to a definition of the priority, resulting in the inability to correctly receive and demodulate CSI part information, resulting in that a part of information of CSI is unable to be correctly received and demodulated, which greatly affects accuracy and completeness of measurement reporting, and is unable to ensure data transmission performances.

In order to solve at least one of the above problems or other similar problems, the embodiment of the first aspect of this disclosure provides a method for transmitting channel state information, applicable to a terminal equipment. In the following description, the terminal equipment may be, for example, the terminal equipment 302 in FIG. 3, and the network device in communication with the terminal equipment may be, for example, the network device 301 in FIG. 3.

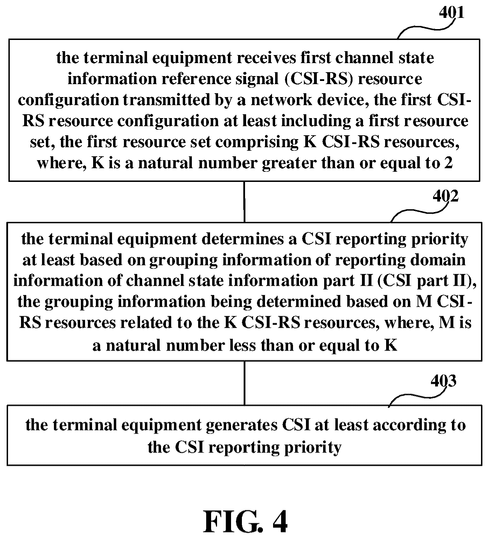

FIG. 4 is a schematic diagram of the method for transmitting channel state information of the first aspect of this disclosure. As shown in FIG. 4, the method includes:

operation 401: the terminal equipment receives first channel state information reference signal (CSI-RS) resource configuration transmitted by a network device, the first CSI-RS resource configuration at least including a first resource set, the first resource set including K CSI-RS resources, where, K is a natural number greater than or equal to 2;

operation 402: the terminal equipment determines a CSI reporting priority at least based on grouping information of reporting domain information of channel state information part II (CSI part II), the grouping information being determined based on M CSI-RS resources related to the K CSI-RS resources, where, M is a natural number less than or equal to K; and

operation 403: the terminal equipment generates CSI at least according to the CSI reporting priority.

In this disclosure, K CSI-RS resources may correspond to K transmission points (TRPs) in a coherent joint transmission (C-JT) scheme. Therefore, the method for transmitting channel state information in this disclosure is applicable to CSI reporting in the C-JT transmission scheme.

In some embodiments, the M CSI-RS resources are related to the K CSI-RS resources involved in operation 401, for example, the M CSI-RS resources are M CSI-RS resources in the K CSI-RS resources.

The M CSI-RS resources are optimal resources in the K CSI-RS resources, for example, the optimal resources include:

a first number of former resources with maximum reference signal received power (RSRP), the first number being less than or equal to M; and/or,

a second number of resources with RSRP greater than or equal to a predetermined threshold, the second number being less than or equal to M; and/or,

a third number of former resources with minimum block error rates (BLERs), the third number being less than or equal to M; and/or,

a fourth number of resources with BLERs less than or equal to a predetermined threshold, the fourth number being less than or equal to M.

In operation 403, the generating CSI by the terminal equipment at least according to the CSI reporting priority includes: omitting a part of the CSI by the terminal equipment according to the CSI reporting priority. For example, when a code rate of the CSI reporting is greater than or equal to a code rate configured by a higher-layer parameter (e.g. maxCodeRate), the terminal equipment may omit or ignore or discard a part of the CSI report starting from a lowest priority according to the CSI reporting priority (e.g. CSI part I reporting priority), until the code rate of the CSI reporting <= the code rate configured by the higher-layer parameter (e.g. maxCodeRate).

In operation 402 of this disclosure, the terminal equipment determines the CSI reporting priority based on the grouping information of the reporting domain information of the channel state information part II (CSI part II).

In some embodiments of operation 402, index values j of the M resources may be arranged in an order as follows: CSI-RS resources in a first order (j = 1) in the M resources are CSI-RS resources to which a strongest coefficient indicator (SCI) in the reporting precoding matrix indicator (PMI) corresponds, and/or CSI-RS resources in second to *M-th* orders (j = 2,3,4... M) in the M resources may be arranged according to a strength of combining coefficients used to determine an amplitude in the reporting PMI (precoding matrix indicator), such as a strength of the combining coefficients used to determine the amplitude in the reporting PMI.

In some embodiments of operation 402, the grouping information includes: a first group (e.g. GO) of information, a second group (e.g. G1) of information, and a third group (e.g. G2) of information.

The first, second, and third groups may have multiple grouping methods.

When a codebook type of the channel state information part II is configured as mode 1, a grouping method 1a may be adopted, in which,

the first group (G0) information includes:

a codebook parameter for determining a spatial domain beam selection result to which CSI-RS resources in the M CSI-RS resources correspond, the parameter being $i_{1,1,j}, i_{1,2,j}$, where, j = 1,2...M; and/or

a codebook parameter for determining a strongest coefficient selection result to which the M CSI-RS resources correspond, the parameter being $i_{1,8,l}$, where, $l$ = 1, ... , $\upsilon$, $\upsilon$ are numbers of transmission layers, and are related to the rank indicator in channel state information part I.

The second group (G1) information includes:

indication information for determining frequency domain basis vectors of the CSI-RS resources in the M CSI-RS resources, the indication information being, for example, $i_{1,5,j}$ $i_{1,6,l,j}$; and/or former X1 high-priority non-zero coefficients $i_{1,7,l,j}$ for determining the CSI-RS resources in the M CSI-RS resources, and/or
reference combining coefficients $i_{2,3,l}$ for determining the M CSIRS resources; and/or
former Y1 high-priority codebook parameters $i_{2,4,l,j}$ for determining differential amplitude combining coefficients of the CSI-RS resources in the M CSI-RS resources, and/or
former Z1 high-priority codebook parameters $i_{2,5,l,j}$ for determining phase combining coefficients of the CSI-RS resources in the M CSI-RS resources, and/or
frequency domain offset information $i_{1,9,l,j\text{-}1}$ for a strongest resource for determining the CSI-RS resources in the M resources;
where, X1, Y1 and Z1 are all natural numbers.

The third group information includes:

latter X2 low-priority non-zero coefficients $i_{1,7,l,j}$ for determining the CSI-RS resources in the M CSI-RS resources, and/or
latter Y2 low-priority codebook parameters $i_{2,4,l,j}$ for determining differential amplitude combining coefficients of the CSI-RS resources in the M CSI-RS resources, and/or
latter Z2 low-priority codebook parameters $i_{2,5,l,j}$ for determining phase combining coefficients of the CSI-RS resources in the M CSI-RS resources;
where, X2, Y2 and Z2 are all natural numbers.

In some embodiments,

a value of X1 is determined according to former first number of index values having a predetermined priority relationship and ordered from lower to higher, the first number being $\sum_{j=1}^{M} 2L_j M_{v,j} - \left\lfloor \frac{\sum_{j=1}^{M} K_{NZ,j}}{2} \right\rfloor$; and/or

a value/values of Y1 and/or Z1 is/are determined according to former second number of the index values having the predetermined priority relationship and ordered from lower to higher, the second number being $\max(0, \left\lceil \frac{\sum_{j=1}^{M} K_{NZ,j}}{2} \right\rceil - v)$; and/or

a value of X2 is determined according to latter third number of the index values having the predetermined priority relationship and ordered from lower to higher, the third number being $\left\lfloor \frac{\sum_{j=1}^{M} K_{NZ,j}}{2} \right\rfloor$; and/or

a value/values of Y2 and/or Z2 is/are determined according to latter fourth number of the index values having the predetermined priority relationship and ordered from lower to higher, the fourth number being $\min(\left\lceil \frac{\sum_{j=1}^{M} K_{NZ,j}}{2} \right\rceil - v, \left\lfloor \frac{\sum_{j=1}^{M} K_{NZ,j}}{2} \right\rfloor)$.

The predetermined priority relationship may be expressed in forms as follows:

$$\mathrm{Pri}(l, i, f, j) = 2 \cdot L \cdot v \cdot \pi(f) + v \cdot i + l + j \ ,$$

with $\pi(f) = \min\left(2 \cdot n_{3,l}^{(f)}, 2 \cdot \left(N_3 - n_{3,l}^{(f)}\right) - 1\right)$ with $l = 1, 2, \dots, v$, $i = 0, 1, \dots, 2L_j - 1$, and $f = 0, 1, \dots, M_{v,j} - 1$, $j = 0, 1, \dots, M$;

when a codebook type of the channel state information part II (CSI part II) is configured as mode 1, a grouping method 1b may be adopted, in which,
the first group (G0) information includes:

a codebook parameter for determining a spatial domain beam selection result to which CSI-RS resources in the M CSI-RS resources correspond, the codebook parameter being $i_{1,1,j} i_{1,2,j}$, where, j = 1,2...M; and/or

a codebook parameter for determining a strongest coefficient selection result to which the M CSI-RS resources correspond, the codebook parameter being $i_{1,8,l}$, where, $l = 1, ..., v$, $v$ is the number of transmission layers, and is related to the rank indicator in the channel state information part II.

The second group (G1) information includes:

indication information $i_{1,5,j} i_{1,6,l,j}$ for determining frequency domain basis vectors of the CSI-RS resources in the M CSI-RS resources, and/or

former X1 high-priority non-zero coefficients $i_{1,7,l,j}$ for determining the CSI-RS resources in the M CSI-RS resources, and/or

reference combining coefficients $i_{2,3,l}$ for determining the M CSI-RS resources, and/or

a differential amplitude combining coefficient $i_{2,3,l}$ (j = 1,2...M/2) for determining CSI-RS resources in former [M/2] CSI-RS resources; and/or

a non-zero coefficient $i_{1,7,l,j}$; and/or

a phase combining coefficient codebook parameter $i_{2,5,l,j}$; and/or

frequency domain offset information $i_{1,9,l,j}$ for determining that CSI-RS resources in the M CSI-RS resources are for strongest resources.

The third group (G2) of information includes:

a differential amplitude combining coefficient $i_{2,4,l,j}$, and/or

a non-zero coefficient, and/or

a phase combining coefficient codebook parameter $i_{2,5,l,j}$, where, j = M/2, M/2+1,...M,

for determining CSI-RS resources in latter [M/2] CSI-RS resources.

In grouping methods 1a and 1b, the strongest resource is determined according to a corresponding resource in the codebook parameter $i_{1,8,l}$ used to determine the strongest coefficient selection result to which the M CSI-RS resources correspond.

When a codebook type of the channel state information part II is configured as mode 2, a grouping method 2a may be adopted, in which,

the first group (G0) information includes:

a codebook parameter for determining a spatial domain beam selection result to which CSI-RS resources in the M CSI-RS resources correspond, the parameter being $i_{1,1,j} i_{1,2,j}$, where, j = 1,2...M; and/or

a codebook parameter for determining a strongest coefficient selection result to which the M CSI-RS resources correspond, the parameter being $i_{1,8,l}$, where, $l = 1, ..., v$, $v$ is the number of transmission layers, and is related to the rank indicator in the channel state information part I.

The second group (G1) information includes:

indication information $i_{1,5} i_{1,6,l}$ for determining common frequency domain basis vectors of the M CSI-RS resources, and/or

former X3 high-priority non-zero coefficients $i_{1,7,l,j}$ for determining the CSI-RS resources in the M CSI-RS resources, and/or

reference combining coefficients $i_{2,3,l}$ for determining the M CSIRS resources;

former Y3 high-priority codebook parameters $i_{2,4,l,j}$ for determining differential amplitude combining coefficients of the CSI-RS resources in the M CSI-RS resources, and/or

former Z3 high-priority codebook parameters $i_{2,5,l,j}$ for determining phase combining coefficients of the CSI-RS resources in the M CSI-RS resources;

where, X3, Y3 and Z3 are all natural numbers.

The third group (G2) of information includes latter X4 low-priority non-zero coefficients $i_{1,7,l,j}$ for determining indication information of frequency domain basis vectors of the CSI-RS resources in the M CSI-RS resources, and/or

latter Y4 low-priority codebook parameters $i_{2,4,l,j}$ for determining differential amplitude combining coefficients of the CSI-RS resources in the M CSI-RS resources, and/or

latter Z4 low-priority codebook parameters $i_{2,5,l,j}$ for determining phase combining coefficients of the CSI-RS resources in the M CSI-RS resources;
where, X4, Y4 and Z4 are all natural numbers.

In some embodiments:

a value of X3 is determined according to former fifth number of index values having a predetermined priority relationship and ordered from lower to higher, the fifth number being $\sum_{j=1}^{M} 2L_j M_v - \left\lfloor \frac{\sum_{j=1}^{M} K_{NZ,j}}{2} \right\rfloor$ ; and/or

a value/values of Y3 and/or Z3 is/are determined according to former second number of the index values having the predetermined priority relationship and ordered from lower to higher, the sixth number being

$$\max(0, \left\lceil \frac{\sum_{j=1}^{M} K_{NZ,j}}{2} \right\rceil - v)_; \text{; and/or}$$

a value of X4 is determined according to latter third number of the index values having the predetermined priority relationship and ordered from higher to lower, the seventh number being $\left\lfloor \frac{\sum_{j=1}^{M} K_{NZ,j}}{2} \right\rfloor$ ; and/or

a value/values of Y4 and/or Z4 is/are determined according to latter fourth number of the index values having the predetermined priority relationship and ordered from lower to higher, the eighth number being

$$\min(\left\lceil \frac{\sum_{j=1}^{M} K_{NZ,j}}{2} \right\rceil - v, \left\lfloor \frac{\sum_{j=1}^{M} K_{NZ,j}}{2} \right\rfloor) \text{;}$$

and the above predefined priority relationship is, for example, in the following forms:

$$\mathrm{Pri}(l, i, f, j) = 2 \cdot L \cdot v \cdot \pi(f) + v \cdot i + l + j \quad,$$

with $\pi(f) = \min\left(2 \cdot n_{3,l}^{(f)}, 2 \cdot \left(N_3 - n_{3,l}^{(f)}\right) - 1\right)$ with $l = 1, 2, \dots, v, i = 0, 1, \dots, 2L_j - 1$, and $f = 0, 1, \dots, M_v - 1, j = 0, 1, \dots, M$.

When a codebook type of the channel state information part II is configured as mode 2, a grouping method 2b may be adopted, in which,

the first group information includes a codebook parameter $i_{1,1,j}, i_{1,2,j}$ for determining a spatial domain beam selection result to which CSI-RS resources in the M CSI-RS resources correspond, where, j = 1,2...M, and/or
a codebook parameter $i_{1,8,l}$ for determining a strongest coefficient selection result to which the M CSI-RS resources correspond, where, $l = 1, \dots, v, v$ is the number of transmission layers, and is related to the rank indicator in the channel state information part I.

The second group information includes:

indication information $i_{1,5} i_{1,6,l}$ for determining common frequency domain basis vectors of the M CSI-RS resources, and/or
reference combining coefficients $i_{2,3,l}$ for determining the M CSIRS resources, and/or
differential amplitude combining coefficients $i_{2,4,l,j}$ (j = 1,2...M/2) for determining CSI-RS resources in former [M/2] CSI-RS resources, and/or
a non-zero coefficient $i_{1,7,l,j}$, and/or
a phase combining coefficient codebook parameter $i_{2,5,l,j}$. The third group information includes:

a differential amplitude combining coefficient $i_{2,4,l,j}$ for determining CSI-RS resources in latter [M/2] CSI-RS resources, and/or
a non-zero coefficient $i_{1,7,l,j}$, and/or
a phase combining coefficient codebook parameter $i_{2,5,l,j}$ (j = M/2, M/2+1,...M).

In grouping methods 2a and 2b, the strongest resource is determined according to a corresponding resource in the codebook parameter used to determine the strongest coefficient selection result to which the M CSI-RS resources correspond.

In other embodiments of operation 402, the grouping information may include: a *zero-th* group information (G0) determined based on the M CSI-RS resources, and M first group information (G10~GM0) and M second group information (G11~GM1) determined based on each resource in the M CSI-RS resources. For the above grouping information, when a codebook type of the channel state information part II is configured as mode 1 or mode 2, grouping method 3 may be used. In grouping method 3,

the *zero-th* group information (G0) includes:

a codebook parameter $i_{1,8,l}$ used to determine the strongest coefficient selection result to which the M CSI-RS resources correspond, where, $l = 1, ..., \upsilon$, $\upsilon$ is the number of transmission layers, and is related to the rank indicator in the channel state information part I; and/or

reference combining coefficients $i_{2,3,l}$ used to determine the M CSI-RS resources; and/or

indication information $i_{1,5}i_{1,6,l}$ for determining the common frequency domain basis vectors of the M CSI-RS resources when configured as mode 2; and/or

a *j-th* first group information (Gj0) in the M pieces of first group information (G10~GMO) includes a codebook parameter $i_{1,1,j}i_{1,2,j}$ for determining a spatial domain beam selection result to which a *j-th* CSI-RS resource corresponds, where, $1 \le j \le M$; and/or

a *j-th* second group information (Gj1) in the M pieces of second group information (G11~GM1) includes:

indication information $i_{1,5,j}\, i_{1,6,l,j}$ used to determine a frequency domain basis vector in a *j-th* CSI-RS resource when configured as mode 1; and/or

indication information $i_{1,9,1,l,j-1}$ used to determine a frequency domain basis vector offset in the *j-th* CSI-RS resource when configured as mode 1; and/or

differential amplitude combining coefficients $i_{2,4,l,j}$ and/or non-zero coefficients $i_{1,7,l,j}$ and/or phase combining coefficient codebook parameters $i_{2,5,l,j}$ in the *j-th* CSI-RS resource.

In some other embodiments of operation 402, the grouping information may include: a *zero-th* group information (G0) determined based on the M CSI-RS resources, and M first group information (G10~GMO) M second group information (G11~GM1) and M third group information (G12~GM2) determined based on each resource in the M CSI-RS resources. For the above grouping information, when a codebook type of the channel state information part II is configured as mode 1 or mode 2, grouping method 4 may be used. In grouping method 4,

the *zero-th* group information (G0) includes:

a codebook parameter $i_{1,8,l}$ used to determine the strongest coefficient selection result to which the M resources correspond, where, $l = 1, ..., v$, $\upsilon$ is the number of transmission layers, and is related to the rank indicator in the channel state information part I; and/or

reference combining coefficients $i_{2,3,l}$ used to determine the M CSI-RS resources; and/or

indication information $i_{1,5}i_{1,6,l}$ for determining common frequency domain basis vectors of the M CSI-RS resources when configured as mode 2; and/or

*j-th* first group information (Gj0) in the M pieces of first group information includes a codebook parameter $i_{1,1,j}i_{1,2,j}$ for determining a spatial domain beam selection result to which a *j-th* CSI-RS resource corresponds, where, $1 \le j \le M$; and/or

a *j-th* second group information (Gj1) in the M pieces of second group information (G11~GM1) includes:

indication information $i_{1,5,j}\, i_{1,6,l,j}$ used to determine a frequency domain basis vector in a *j-th* CSI-RS resource when configured as mode 1; and/or

indication information $i_{1,9,1,l,j-1}$ used to determine a frequency domain basis vector offset in the *j-th* CSI-RS resource when configured as mode 1; and/or

a former ninth number high priorities used to determine a differential amplitude combining coefficient of a CSI-RS resource in the *j-th* CSI-RS resource, the ninth number being $2L_j M_{\upsilon,j} - \left\lfloor \frac{K_{NZ,j}}{2} \right\rfloor$; and/or

a former tenth number of non-zero coefficients, the tenth number being $\max(0, \left\lfloor \frac{K_{NZ,j}}{2} \right\rfloor - \upsilon)$; and/or

a former eleventh number of phase combining coefficient codebook parameters, the eleventh number being $\max(0, \left\lfloor \frac{K_{NZ,j}}{2} \right\rfloor - \upsilon)$; and/or

*j-th* third group information (Gj2) in the M pieces of third group information includes:

a latter twelfth number of low priorities $i_{2,4,l,j}$ used to determine a differential amplitude combining coefficient of a CSI-RS resource in the *j-th* CSI-RS resource, the twelfth number being $\left\lceil \dfrac{K_{NZ,j}}{2} \right\rceil$ ; and/or

a latter thirteenth number of low-priority non-zero coefficients $i_{1,7,l,j}$, the thirteenth number being

$$\min(0, K_{NZ,j} - v, \left\lfloor \frac{K_{NZ,j}}{2} \right\rfloor) \; ; \text{ and/or}$$

a latter fourteenth number of low-priority phase combining coefficient codebook parameters $i_{2,5,l,j}$, the fourteenth number being $\min(0, K_{NZ,j} - v, \left\lfloor \frac{K_{NZ,j}}{2} \right\rfloor)$ .

The priorities in grouping method 4 may be determined in the following forms:

$$\mathrm{Pri}(l, i, f) = 2 \cdot L \cdot v \cdot \pi(f) + v \cdot i + l \quad ,$$

with $\pi(f) = \min \left( 2 \cdot n_{3,l}^{(f)}, 2 \cdot \left( N_3 - n_{3,l}^{(f)} \right) - 1 \right)$ with *l* = 1, 2, ... , *v*, *i* = 0, 1, ... , 2$L_j$ - 1, and *f* = 0, 1, ... , $M_{v,j}$ - 1.

In some embodiments, the bitwidths of the Part II codebook parameters based on the CJT transmission scheme may be expressed as Table 4 below.

Table 4

| | Information fields $X_1$ | | | | | | |
|---|---|---|---|---|---|---|---|
| | $i_{1,1,j}$ | $i_{1,2,j}$ | $i_{1,8,1,j}$ | $i_{1,8,2,j}$ | $i_{1,8,3,j}$ | $i_{1,8,4,j}$ | |
| Rank=1 $N_3 \le 19$ | $\lceil \log_2(O_1 O_2) \rceil$ | $\left\lceil \log_2 \binom{N_1 N_2}{L_j} \right\rceil$ | $\left\lceil \log_2 \sum\limits_{j=1}^{j=M} K^{NZ} \right\rceil$ | N/A | N/A | N/A | |
| Rank=2 $N_3 \le 19$ | $\lceil \log_2(O_1 O_2) \rceil$ | $\left\lceil \log_2 \binom{N_1 N_2}{L_j} \right\rceil$ | $\left\lceil \log_2(2 \sum\limits_{j=1}^{j=M} L_j) \right\rceil$ | $\left\lceil \log_2(2 \sum\limits_{j=1}^{j=M} L_j) \right\rceil$ | N/A | N/A | |

| | | | | | | |
|---|---|---|---|---|---|---|
| Rank=3 $N_3 \leq 19$ | $\lceil \log_2(O_1 O_2) \rceil$ | $\left\lceil \log_2 \binom{N_1 N_2}{L_j} \right\rceil$ | $\left\lceil \log_2\left(2\sum_{j=1}^{j=M} L_j\right) \right\rceil$ | $\left\lceil \log_2\left(2\sum_{j=1}^{j=M} L_j\right) \right\rceil$ | $\left\lceil \log_2\left(2\sum_{j=1}^{j=M} L_j\right) \right\rceil$ | N/A |
| Rank=4 $N_3 \leq 19$ | $\lceil \log_2(O_1 O_2) \rceil$ | $\left\lceil \log_2 \binom{N_1 N_2}{L_j} \right\rceil$ | $\left\lceil \log_2\left(2\sum_{j=1}^{j=M} L_j\right) \right\rceil$ | $\left\lceil \log_2\left(2\sum_{j=1}^{j=M} L_j\right) \right\rceil$ | $\left\lceil \log_2\left(2\sum_{j=1}^{j=M} L_j\right) \right\rceil$ | $\left\lceil \log_2\left(2\sum_{j=1}^{j=M} \right. \right.$ |
| Rank=1 $N_3 > 19$ | $\lceil \log_2(O_1 O_2) \rceil$ | $\left\lceil \log_2 \binom{N_1 N_2}{L_j} \right\rceil$ | $\left\lceil \log_2 \sum_{j=1}^{j=M} K^{NZ} \right\rceil$ | N/A | N/A | N/A |
| Rank=2 $N_3 > 19$ | $\lceil \log_2(O_1 O_2) \rceil$ | $\left\lceil \log_2 \binom{N_1 N_2}{L_j} \right\rceil$ | $\left\lceil \log_2\left(2\sum_{j=1}^{j=M} L_j\right) \right\rceil$ | $\left\lceil \log_2\left(2\sum_{j=1}^{j=M} L_j\right) \right\rceil$ | N/A | N/A |
| Rank=3 $N_3 > 19$ | $\lceil \log_2(O_1 O_2) \rceil$ | $\left\lceil \log_2 \binom{N_1 N_2}{L_j} \right\rceil$ | $\left\lceil \log_2\left(2\sum_{j=1}^{j=M} L_j\right) \right\rceil$ | $\left\lceil \log_2\left(2\sum_{j=1}^{j=M} L_j\right) \right\rceil$ | $\left\lceil \log_2\left(2\sum_{j=1}^{j=M} L_j\right) \right\rceil$ | N/A |
| Rank=4 $N_3 > 19$ | $\lceil \log_2(O_1 O_2) \rceil$ | $\left\lceil \log_2 \binom{N_1 N_2}{L_j} \right\rceil$ | $\left\lceil \log_2\left(2\sum_{j=1}^{j=M} L_j\right) \right\rceil$ | $\left\lceil \log_2\left(2\sum_{j=1}^{j=M} L_j\right) \right\rceil$ | $\left\lceil \log_2\left(2\sum_{j=1}^{j=M} L_j\right) \right\rceil$ | $\left\lceil \log_2\left(2\sum_{j=1}^{j=M} \right. \right.$ |

Information fields $X_2$

| | $i_{2,3,1}$ | $i_{2,3,2}$ | $i_{2,3,3}$ | $i_{2,3,4}$ | $i_{1,5}$ | $i_{1,6,1}$ | $i_{1,6,2}$ | $i_{1,6,3}$ | $i_{1,6,4}$ | $\{i_{2,4,l,j}\}_{l=1,...,}$ | $\{i_{2,5,l,j}\}_{l=1,...,}$ | $\{i_{1,7,l,}$ | $i_{1,9,l,j-1}$ (mode1) |
|---|---|---|---|---|---|---|---|---|---|---|---|---|---|
| Rank =1 $N_3 \leq 19$ | 4 | N/A | N/A | N/A | N/A | $\left\lceil \log_2 \binom{N_3-1}{M_1-1} \right\rceil$ | N/A | N/A | N/A | $3(K^{NZ,j}-1)$ | $4(K^{NZ,j}-1)$ | $2L_j M$ | $\log_2(M_1-1)$ |
| Rank =2 $N_3 \leq 19$ | 4 | 4 | N/A | N/A | N/A | $\left\lceil \log_2 \binom{N_3-1}{M_2-1} \right\rceil$ | $\left\lceil \log_2 \binom{N_3-1}{M_2-1} \right\rceil$ | N/A | N/A | $3(K^{NZ,j}-2)$ | $4(K^{NZ,j}-2)$ | $4L_j M$ | $\log_2(M_2-1)$ |
| Rank =3 $N_3 \leq 19$ | 4 | 4 | 4 | N/A | N/A | $\left\lceil \log_2 \binom{N_3-1}{M_3-1} \right\rceil$ | $\left\lceil \log_2 \binom{N_3-1}{M_3-1} \right\rceil$ | $\left\lceil \log_2 \binom{N_3-1}{M_3-1} \right\rceil$ | N/A | $3(K^{NZ,j}-3)$ | $4(K^{NZ,j}-3)$ | $6L_j M$ | $\log_2(M_3-1)$ |
| Rank | 4 | 4 | 4 | 4 | N/A | $\left\lceil \log_2 \binom{N_3-1}{M_4-1} \right\rceil$ | $\left\lceil \log_2 \binom{N_3-1}{M_4-1} \right\rceil$ | $\left\lceil \log_2 \binom{N_3-1}{M_4-1} \right\rceil$ | $\left\lceil \log_2 \binom{N_3-1}{M_4-1} \right\rceil$ | $3(K^{NZ,j}-4)$ | $4(K^{NZ,j}-4)$ | $8L_j M$ | $\log_2(M_4-1)$ |

| | | | | | | | | | | | | | |
|---|---|---|---|---|---|---|---|---|---|---|---|---|---|
| =4<br><br>$N_3$<br>$\leq 19$ | | | | | | | | | | | | | |
| Rank =1<br>$N_3 > 19$ | 4 | N/A | N/A | N/A | $\lceil \log_2(2M_1) \rceil$ | $\left\lceil \log_2 \binom{2M_1 - 1}{M_1 - 1} \right\rceil$ | N/A | N/A | N/A | $3(K^{NZ,J} - 1)$ | $4(K^{NZ,J} - 1)$ | $2L_j M$ | $\log_2(M_1 - 1)$ |
| Rank =2<br>$N_3 > 19$ | 4 | 4 | N/A | N/A | $\lceil \log_2(2M_2) \rceil$ | $\left\lceil \log_2 \binom{2M_2 - 1}{M_2 - 1} \right\rceil$ | $\left\lceil \log_2 \binom{2M_2 - 1}{M_2 - 1} \right\rceil$ | N/A | N/A | $3(K^{NZ,J} - 2)$ | $4(K^{NZ,J} - 2)$ | $4L_j M$ | $\log_2(M_2 - 1)$ |
| Rank =3<br>$N_3 > 19$ | 4 | 4 | 4 | N/A | $\lceil \log_2(2M_3) \rceil$ | $\left\lceil \log_2 \binom{2M_3 - 1}{M_3 - 1} \right\rceil$ | $\left\lceil \log_2 \binom{2M_3 - 1}{M_3 - 1} \right\rceil$ | $\left\lceil \log_2 \binom{2M_3 - 1}{M_3 - 1} \right\rceil$ | N/A | $3(K^{NZ,J} - 3)$ | $4(K^{NZ,J} - 3)$ | $6L_j M$ | $\log_2(M_3 - 1)$ |
| Rank =4<br>$N_3 > 19$ | 4 | 4 | 4 | 4 | $\lceil \log_2(2M_4) \rceil$ | $\left\lceil \log_2 \binom{2M_4 - 1}{M_4 - 1} \right\rceil$ | $\left\lceil \log_2 \binom{2M_4 - 1}{M_4 - 1} \right\rceil$ | $\left\lceil \log_2 \binom{2M_4 - 1}{M_4 - 1} \right\rceil$ | $\left\lceil \log_2 \binom{2M_4 - 1}{M_4 - 1} \right\rceil$ | $3(K^{NZ,J} - 4)$ | $4(K^{NZ,J} - 4)$ | $8L_j M$ | $\log_2(M_4 - 1)$ |

In operation 402, the priority order may be determined according to the above grouping methods.

In some embodiments, priority order 1 may be used for grouping method 1a, grouping method 1b, grouping method 2a and grouping method 2b, for example, GO>G1>G2.

In priority order 1:

priorities of first group information to which all CSI-RS resources in the M CSI-RS resources correspond respectively are higher than priorities of second group information to which all CSI-RS resources in the M CSI-RS resources correspond respectively, and

priorities of second group information to which all CSI-RS resources in the M CSI-RS resources correspond respectively are higher than priorities of third group information to which all CSI-RS resources in the M CSI-RS resources correspond respectively.

In the first group information, priorities of information corresponding to the CSI-RS resources in the M CSI-RS resources are determined according to priorities of the CSI-RS resources; and/or

in the second group information, priorities of information corresponding to the CSI-RS resources in the M CSI-RS resources are determined according to priorities of the CSI-RS resources; and/or

in the third group information, priorities of information corresponding to the CSI-RS resources in the M CSI-RS resources are determined according to priorities of the CSI-RS resources.

In some embodiments, priority order 2 may be used for grouping method 3.

For example, in priority order 2:

a priority of the *zero-th* group information (G0) is highest;

a priority of first group information (G10~GMO) and a priority of second group information (G11~GM1) to which a *(j+1)-th* resource in the M CSI-RS resources corresponds are higher than a priority of first group information (G10~GM0) and a priority of second group information (G11~GM1) to which a *(j-1)-th* resource in the M CSI-RS resources corresponds, where, $1 \leq j \leq M$; and

that a priority of first group information (G10~GM0) to which the *j-th* resource corresponds is higher than a priority of second group information (G11~GM1) to which the *j-th* resource corresponds.

For example, in priority order 2, a descending order of the priorities of the groups is:

$$G0 > G10 > G11 > G20 > G21\ldots > GM0 > GM1;$$

where, G0 denotes first group information to which all CSI-RS resources in M CSI-RS resources correspond respectively;

G10,..., GMO denote first group information to which all CSI-RS resources in M CSI-RS resources correspond respectively;

G11,..., GM1 denote second group information to which all CSI-RS resources in M CSI-RS resources correspond respectively.

In some embodiments, for grouping method 4, priority order 3 may be used. For example, in priority order 3,

a priority of the *zero-th* group information (G0) is highest,

a priority of first group information (G10~GM0), a priority of second group information (G11~GM1) and a priority of third group information (G12~GM2) to which a *(j+1)-th* resource in the M CSI-RS resources corresponds are higher than a priority of first group information (G10~GM0), a priority of second group information (G11~GM1) and a priority of third group information (G12~GM2) to which a *(j-1)-th* resource in the M CSI-RS resources corresponds, where, $1 \leq j \leq M$; and

a priority of first group information (G10~GM0) to which the *j-th* resource corresponds is higher than a priority of second group information (G11~GM1) to which the *j-th* resource corresponds, and the priority of the second group information (G12~GM2) to which *the j-th* resource corresponds is higher than a priority of third group information (G12~GM2) to which the *j-th* resource corresponds.

For example, in priority order 3, a descending order of the priorities of the groups is:

$$G0 > G10 > G11 > G12 > G20 > G21 > G22\ldots > GM0 > GM1 > GM2;$$

G10,..., GMO denote first group information to which all CSI-RS resources in M CSI-RS resources correspond respectively;

G11,..., GM1 denote second group information to which all CSI-RS resources in M CSI-RS resources correspond respectively;

G12,..., GM2 denote third group information to which all CSI-RS resources in M CSI-RS resources correspond respectively.

The methods for transmitting and receiving channel state information in this disclosure shall be further described in detail by way of examples.

Example 1:

The above priority order 1 and mode 1 are adopted in Example 1.

In Example 1, operations of the network device are as follows.

■ configuration information and CSI reporting settings of the multi-point joint coherent transmission (CJT) scheme is received via higher-layer signaling.

Step 1: the network device receives and measures CSI resources based on CJT transmission via following newly-added higher-layer configuration CSI resource settings.

♦ the resource settings contain an NZP-CSI-RS resource set for channel measurement, the NZP-CSI-RS resource set including four CSI-RS resources.

Step 2: the network device receives CSI reporting information based on the multi-point joint coherent transmission scheme (CJT) by the network device from the terminal side, wherein CSI part I + CSI part II.

Step 3: the number of resources and the number PMI of transmission points to which the CJT transmission scheme corresponds in the CSI feedback are determined according to the TRP/CSI-RS selection result in part I.

For example, in 1101, it is determined that the UE selects resources 1, 2 and 4 as the optimal CJT transmission resources.

Step 4: the network device determines following first grouping information and bitwidths of part II codebook parameters.

The first grouping information may be determined in one of the following methods:

grouping method 1a or 1b: if the current codebook type is configured as 'mode 1' Grouping information in this grouping method is:

- ♦ G0: SD selection beam$i_{1,1,j}$, $i_{1,2,j}$+indication$i_{1,8,l}$, of the strongest coefficient, where, j = 1,2... 3; where, 3 is the number of bitmaps with a value '1' in the TRP selection report result in the CJT transmission scheme.
- ♦ G1:

  - ■ FD basis vector indication$i_{1,5,j}$, $i_{1,6,l,j}$: extended to per TRP dimension
  - ■ Optionally, FD offset: new reporting field$i_{1,9,l,j}$
  - ■ $i_{1,7,l,j}$ (high-priority non-zero coefficient bitmap):

    - ♦

$$\mathrm{Pri}(l,i,f) = 2 \cdot L_j \cdot \upsilon \cdot \pi(f) + \upsilon \cdot i + l + j,$$

with $\pi(f) = \min\left(2 \cdot n_{3,l}^{(f)}, 2 \cdot \left(N_3 - n_{3,l}^{(f)}\right) - 1\right)$ with $l$ = 1,2, ..., $\upsilon$, $i$ = 0,1, ... ,2$L\_j$ - 1, $f$ = 0,1, ... , $M_\upsilon$ - 1, $j$ = 0,1,2,3

      - ♦ Optionally, j=1 may correspond to a CSI-RS resource to which the SCI strongest coefficient corresponds
      - ♦ Optionally, j = 2, 3, 4 may be CSI-RS arranged in an order of amplitude coefficients

  - ■ $i_{2,3,l,j}$ (reference combining coefficient): extended to per TRP dimension
  - ■ The highest priority elements of $i_{2,4,l,j}$ (strongly polarized differential amplitude combining coefficient) and $i_{2,5,l,j}$ ($l$ = 1, ..., $\upsilon$) (strongly polarized phase combining coefficient)

- ♦ G2:

  - ■ $i_{1,7,l,j}$ (low-priority non-zero coefficient bitmap):

    - ■ The lowest priority elements of $i_{2,4,l}$ (weakly polarized differential amplitude combining coefficient) and $i_{2,5,l}$ ($l$ = 1, ... , $\upsilon$) (weakly polarized phase combining coefficient)

Step 3: the terminal side omits the CSI reporting information from the lowest priority based on priority order 1, until the CSI reporting code rate <= the code rate configured by the higher-layer parameter maxCodeRate.

- ■ Priority order 1: G0 > G1 > G2
- ■ Specifically, when the CSI reporting code rate>the code rate configured by the higher-layer parameter maxCodeRate, the terminal equipment starts omitting and discarding according to priority principle 1.

In Example 1, the CSI reporting priority may be as shown in Table 5.

Table 5

| Priority 0:<br>For CSI reports 1 to $N_{Rep}$, Group 0 CSI for CSI reports configured as 'typeII-r18-coherentJT'; Part 2 wideband CSI for CSI reports configured otherwise |
| --- |
| Priority 1:<br>Group 1 CSI for CSI report 1, if configured as 'typeII-r18-coherentJT'; Part 2 subband CSI of even subbands for CSI report 1, if configured otherwise |

(continued)

| Priority 2: Group 2 CSI for CSI report 1, if configured as 'typeII-r18-coherentJT'; Part 2 subband CSI of odd subbands for CSI report 1, if configured otherwise |
| --- |
| Priority 3: Group 1 CSI for CSI report 2, if configured as 'typeII-r18-coherentJT'; Part 2 subband CSI of even subbands for CSI report 2, if configured otherwise |
| Priority 4: Group 2 CSI for CSI report 2, if configured as 'typeII-r18-coherentJT'. Part 2 subband CSI of odd subbands for CSI report 2, if configured otherwise |
| ⋮ |
| Priority $2N_{Rep}$ - 1: Group 1 CSI for CSI report $N_{Rep}$, if configured as 'typeII-r18-coherentJT'; Part 2 subband CSI of even subbands for CSI report $N_{Rep}$, if configured otherwise |
| Priority $2N_{Rep}$: Group 2 CSI for CSI report $N_{Rep}$, if configured as 'typeII-r18-coherentJT'; Part 2 subband CSI of odd subbands for CSI report $N_{Rep}$, if configured otherwise |

In Example 1, the method of the terminal equipment is as follows:

- Step 1: the terminal equipment determines the multi-point joint coherent transmission scheme (CJT), CSI resource settings and reporting settings according to receiving higher-layer configuration,

    ■ configuration information is consistent with that of the network device

- Step 2: the terminal equipment receives the resources for measuring the four CSI RSs to determine CSI part I information, including but not limited to:

    ■ the resources for measuring the four CSI RSs by the terminal equipment are received to determine 3 transmission points/CSI-RS resource selection results, for example:

        ♦ it is selected and determined that 1, 2 and 4 are optimal transmission points/CSI-RS resource selection results by measuring such channel information as large-scale RSRP;

            ● wherein, the TRP/CSI-RS resource selection reporting result in the CJT transmission scheme is 1101.

- Step 3: the terminal side determines the CSI reporting priority based on the newly-added CSI part II reporting domain information and the first grouping information.

    ■ Consistent with the network device.

- Step 4: the terminal side omits a part of the CSI reporting information based on a lowest priority of CSI Part II reporting, and omits the CSI reporting from the lowest priority, until the CSI reporting code rate <= the code rate configured by the higher-layer parameter maxCodeRate.

    ■ Consistent with the network device

Example 2:

The above priority order 1 and mode 2 are adopted in Example 2.

In Example 2, operations of the network device are as follows.

    ■ configuration information and CSI reporting settings of the multi-point joint coherent transmission (CJT) scheme are received via higher-layer signaling.

Step 1: the network device receives and measures CSI resources based on CJT transmission via following newly-added higher-layer configuration CSI resource settings

♦ the resource settings contain an NZP-CSI-RS resource set for channel measurement, the NZP-CSI-RS resource set including four CSI-RS resources.

Step 2: the network device receives CSI reporting information based on the multi-point joint coherent transmission scheme (CJT) from the terminal side, wherein CSI part I + CSI part II

Step 3: the number of resources and the number PMI of transmission points to which the CJT transmission scheme corresponds in the CSI feedback are determined according to the TRP/CSI-RS selection result in part I

♦ For example, in 1101, it is determined that the UE selects resources 1, 2 and 4 as the optimal CJT transmission resources

Step 4: the network device determines following first grouping information and bitwidths of part II codebook parameters, where, the first grouping information may be determined in the following method:

■

per TRP SD + TRP-common FD +per TRP W2+per TRP NNZC bitmap

● G0: SD selection beam$i_{1,1,j}$,$i_{1,2,j}$+indication$i_{1,8,l}$, of the strongest coefficient

■ wherein, j = 1,2... M; where, M is the number of bitmaps with a value '1' in the TRP selection report result in the CJT transmission scheme.

● G1:

■ FD basis vector indication$i_{1,5,j}$, $i_{1,6,l,j}$: TRP-common
■ $i_{1,7,l,j}$ (high-priority non-zero coefficient bitmap):

$$\mathrm{Pri}(l, i, f) = 2 \cdot L_j \cdot v \cdot \pi(f) + v \cdot i + l + j,$$

with $\pi(f) = \min\left(2 \cdot n_{3,l}^{(f)}, 2 \cdot \left(N_3 - n_{3,l}^{(f)}\right) - 1\right)$ with $l = 1, 2, \ldots, v$, $i = 0, 1, \ldots, 2L\_j - 1$, $f = 0, 1, \ldots$, $M_v - 1$, $j = 0, 1, 2, \ldots, M$

♦ Optionally, j=1 may correspond to a CSI-RS resource to which the SCI strongest coefficient corresponds
♦ Optionally, j=2, 3, 4 may be CSI-RS arranged in an order of amplitude coefficients

■$i_{2,3,l}$ (reference combining coefficient)
■ The highest priority elements of $i_{2,4,l,j}$ (strongly polarized differential amplitude combining coefficient) and $i_{2,5,l,j}$ ($l = 1, \ldots, v$) ((strongly polarized phase combining coefficient)

● G2:

■ $i_{1,7,l,j}$ (low-priority non-zero coefficient bitmap):

■ The lowest priority elements of $i_{2,4,l}$ (weakly polarized differential amplitude combining coefficient) and $i_{2,5,l}$ ($l = 1, \ldots, v$) (weakly polarized phase combining coefficient)

Step 3: the terminal side omits the CSI reporting information from the lowest priority based on priority order 1, until the CSI reporting code rate <= the code rate configured by the higher-layer parameter maxCodeRate.

Priority order 1: GO > G1 > G2

Specifically, when the CSI reporting code rate>the code rate configured by the higher-layer parameter maxCodeRate, the UE starts omitting and discarding according to priority principle 1, as shown in Table 6 below.

Table 6

| Priority 0:<br>For CSI reports 1 to $N_{Rep}$, Group 0 CSI for CSI reports configured as 'typeII-r18-coherentJT'; Part 2 wideband CSI for CSI reports configured otherwise |
|---|
| Priority 1:<br>Group 1 CSI for CSI report 1, if configured as 'typeII-r18-coherentJT'; Part 2 subband CSI of even subbands for CSI report 1, if configured otherwise |
| Priority 2:<br>Group 2 CSI for CSI report 1, if configured as 'typeII-r18-coherentJT'; Part 2 subband CSI of odd subbands for CSI report 1, if configured otherwise |
| Priority 3:<br>Group 1 CSI for CSI report 2, if configured as 'typeII-r18-coherentJT'; Part 2 subband CSI of even subbands for CSI report 2, if configured otherwise |
| Priority 4:<br>Group 2 CSI for CSI report 2, if configured as 'typeII-r18-coherentJT'. Part 2 subband CSI of odd subbands for CSI report 2, if configured otherwise |
| ⋮ |
| Priority $2N_{Rep}$ - 1:<br>Group 1 CSI for CSI report $N_{Rep}$, if configured as 'typeII-r18-coherentJT'; Part 2 subband CSI of even subbands for CSI report $N_{Rep}$, if configured otherwise |
| Priority $2N_{Rep}$:<br>Group 2 CSI for CSI report $N_{Rep}$, if configured as'typeII-r18-coherentJT'; Part 2 subband CSI of odd subbands for CSI report $N_{Rep}$, if configured otherwise |

Operations of the terminal equipment are as follows:

- Step 1: the terminal side determines the multi-point joint coherent transmission scheme (CJT), CSI resource settings and reporting settings according to receiving higher-layer configuration,

  ■ configuration information is consistent with that of the network device

- Step 2: the terminal side receives the resources for measuring the four CSI RSs to determine CSI part I information, including but not limited to:

  ■ the terminal side receives the resources for measuring the four CSI RSs to determine 3 transmission points/CSI-RS resource selection results

    ♦ it is selected and determined that 1, 2 and 4 are optimal transmission points/CSI-RS resource selection results by measuring such channel information as large-scale RSRP

      ● wherein, the TRP/CSI-RS resource selection reporting result in the CJT transmission scheme is 1101

- Step 3: the terminal side determines the CSI reporting priority based on the newly-added CSI part II reporting domain information and the first grouping information

  ■ Consistent with the network device

- Step 4: the terminal side omits a part of the CSI reporting information based on a lowest priority of CSI Part II reporting, and omits the CSI reporting from the lowest priority, until the CSI reporting code rate <= the code rate configured by the higher-layer parameter maxCodeRate.

■ Consistent with the network device

Example 3:

Priority order 2 is adopted in Example 3.

Operations of the network device are as follows.

■ configuration information and CSI reporting settings of the multi-point joint coherent transmission (CJT) scheme are received via higher-layer signaling.

Step 1: the network device receives and measuring CSI resources based on CJT transmission via following newly-added higher-layer configuration CSI resource settings

♦ the resource settings contain an NZP-CSI-RS resource set for channel measurement, the NZP-CSI-RS resource set including four CSI-RS resources.

Step 2: the network device receives CSI reporting information based on the multi-point joint coherent transmission scheme (CJT) from the terminal side, wherein CSI part I + CSI part II

Step 3: the number of resources and the number PMI of transmission points to which the CJT transmission scheme corresponds in the CSI feedback are determined according to the TRP/CSI-RS selection result in part I

♦ For example, in 1101, it is determined that the UE selects resources 1, 2 and 4 as the optimal CJT transmission resources

Step 4: the network device determines following first grouping information and bitwidths of part II codebook parameters.

Where, the first grouping information may be determined in one of the following methods:

■ grouping method 3: if the current codebook type is configured as 'mode 1' or 'mode 2'

● GO is used to determine codebook parameters of the spatial domain beam selection results corresponding to the CSI-RS resources in the M CSI-RS resources, the parameters being $i_{1,1,j}, i_{1,2,j}$; where, j = 1,2... M; and/or used to determine codebook parameters of the strongest coefficient selection results corresponding to the M CSI-RS resources, the codebook parameters being $i_{1,8,l}$; where, $l$ = 1, ..., $\upsilon$, $\upsilon$ is the number of transmission layers, and is related to the rank indicator in the channel state information part I.

● G10~G11: when j = 1 in grouping methods 1/2, it represents all G0~G1 grouping information of TRP1 or selected CSI-RS #1

● G20~G21: when j = 2 in grouping methods 1/2, it represents all G0~G1 grouping information of TRP2 or selected CSI-RS #2

● …

● GM0~GM1: when j = M in grouping methods 1/2, it represents all G0~G1 grouping information of TRP M or selected CSI-RS #M

● Optionally, j = 1 may correspond to the CSI-RS resource to which the SCI strongest coefficient corresponds

● Optionally, j = 2, 3, 4 may be CSI-RS arranged in an order of amplitude coefficients

Step 3: the terminal side omits the CSI reporting information from the lowest priority based on one of the following priorities, until the CSI reporting code rate <= the code rate configured by the higher-layer parameter maxCodeRate.

Priority order 2: GO > G10 > G11 > G20 > G21... > GM0 > GM1

Specifically, when the CSI reporting code rate>the code rate configured by the higher-layer parameter maxCodeRate, the UE starts omitting and discarding according to priority order 1, as shown in Table 7 below.

Table 7

| |
| --- |
| Priority 0:<br>For CSI reports 1 to $N_{Rep}$, Group 0 CSI for CSI reports configured as 'typeII-r18-coherentJT'; Part 2 wideband CSI for CSI reports configured otherwise |
| Priority 1:<br>For CSI reports 1 to $N_{Rep}$, Group 10 CSI for CSI reports configured as 'typeII-r18-coherentJT'; Part 2 wideband CSI for CSI reports configured otherwise |
| Priority 2:<br>Group 11 CSI for CSI report 1, if configured as 'typeII-r18-coherentJT'; Part 2 subband CSI of even subbands for CSI report 1, if configured otherwise |
| ... |
| Priority 2M:<br>For CSI reports 1 to $N_{Rep}$, Group M0 CSI for CSI reports configured as 'typeII-r18-coherentJT'; Part 2 wideband CSI for CSI reports configured otherwise |
| Priority 2M+1:<br>Group M1 CSI for CSI report 1, if configured as 'typeII-r18-coherentJT'; Part 2 subband CSI of even subbands for CSI report 1, if configured otherwise |
| ... |
| ⋮ |
| Priority $2N_{Rep}$ - 3M:<br>Group M0 CSI for CSI report $N_{Rep}$, if configured as 'typeII-r18-coherentJT'; Part 2 subband CSI of even subbands for CSI report $N_{Rep}$, if configured otherwise |
| Priority $2N_{Rep}$:<br>Group M1 CSI for CSI report $N_{Rep}$, if configured as 'typeII-r18-coherentJT'; Part 2 subband CSI of odd subbands for CSI report $N_{Rep}$, if configured otherwise |

Operations of the terminal equipment are as follows:

- Step 1: the terminal side determines the multi-point joint coherent transmission scheme (CJT), CSI resource settings and reporting settings according to receiving higher-layer configuration.

    ■ configuration information is consistent with that of the network device

- Step 2: by the terminal side receives the resources for measuring the four CSI RSs to determine CSI part I information, including but not limited to:

    ■ the terminal equipment receives the resources for measuring the four CSI RSs to determine 3 transmission points/CSI-RS resource selection results

        ♦ it is selected anddetermined that 1, 2 and 4 are optimal transmission points/CSI-RS resource selection results by measuring such channel information as large-scale RSRP

            ● wherein, the TRP/CSI-RS resource selection reporting result in the CJT transmission scheme is 1101

- Step 3: the terminal side determines the CSI reporting priority based on the newly-added CSI part II reporting domain information and the first grouping information

    ■ Consistent with the network device

- Step 4: the terminal side omits a part of the CSI reporting information based on a lowest priority of CSI Part II reporting, and omits the CSI reporting from the lowest priority, until the CSI reporting code rate <= the code rate configured by the higher-layer parameter maxCodeRate.

■ Consistent with the network device

Example 4:

Priority order 3 is adopted in Example 4.

Operations of the network device are as follows:
Configuration information and CSI reporting settings of the multi-point joint coherent transmission (CJT) scheme are received via higher-layer signaling.

Step 1: the network device receives and measures CSI resources based on CJT transmission via following newly-added higher-layer configuration CSI resource settings

♦ the resource settings contain an NZP-CSI-RS resource set for channel measurement, the NZP-CSI-RS resource set including four CSI-RS resources.

Step 2: the network device receives CSI reporting information based on the multi-point joint coherent transmission scheme (CJT) from the terminal side, wherein CSI part I + CSI part II

Step 3: the number of resources and the number PMI of transmission points to which the CJT transmission scheme corresponds in the CSI feedback by the base station are determined according to the TRP/CSI-RS selection result in part I

♦ For example, in 1101, it is determined that the UE selects resources 1, 2 and 4 as the optimal CJT transmission resources

Step 4: the network device determines following first grouping information and bitwidths of part II codebook parameters.

Where, the first grouping information may be determined in one of the following methods:

■ grouping method 3: if the current codebook type is configured as 'mode 1' or 'mode 2'

● GO is used to determine codebook parameters of the spatial domain beam selection results corresponding to the CSI-RS resources in the M CSI-RS resources, the parameters being $i_{1,1,j}$, $i_{1,2,j}$; where, j = 1,2... M; and/or used to determine codebook parameters of the strongest coefficient selection results corresponding to the M CSI-RS resources, the codebook parameters being $i_{1,8,l}$; where, $l$ = 1, ..., $\upsilon$, $v$ is the number of transmission layers, and is related to the rank indicator in the channel state information part I.

● G10~G12: when j = 1 in grouping methods 1/2, it represents all G0~G2 grouping information of TRP1 or selected CSI-RS #1

● G20~G22: when j = 2 in grouping methods 1/2, it represents all G0~G2 grouping information of TRP2 or selected CSI-RS #2

● …

● GM0~GM2: when j = M in grouping methods 1/2, it represents all G0~G2 grouping information of TRP M or selected CSI-RS #M

● Optionally, j = 1 may correspond to the CSI-RS resource to which the SCI strongest coefficient corresponds

● Optionally, j = 2, 3, 4 may be CSI-RS arranged in an order of amplitude coefficients

Step 3: the terminal side omits the CSI reporting information from the lowest priority based on one of the following priorities, until the CSI reporting code rate <= the code rate configured by the higher-layer parameter maxCodeRate.

Priority order 3: G0 > G10 > G11 > G20 > G21 > G22...> GM0 > GM1 > GM2

Specifically, when the CSI reporting code rate>the code rate configured by the higher-layer parameter maxCodeRate, the UE starts omitting and discarding according to priority order 3, as shown in Table 8 below.

Table 8

| Priority 0: For CSI reports 1 to $N_{Rep}$, Group 0 CSI for CSI reports configured as 'typeII-r18-coherentJT'; Part 2 wideband CSI for CSI reports configured otherwise |
|---|
| Priority 1: |

(continued)

| |
| --- |
| For CSI reports 1 to $N_{Rep}$, Group 10 CSI for CSI reports configured as 'typeII-r18-coherentJT'; Part 2 wideband CSI for CSI reports configured otherwise |
| Priority 2: Group 11 CSI for CSI report 1, if configured as 'typeII-r18-coherentJT'; Part 2 subband CSI of even subbands for CSI report 1, if configured otherwise |
| Priority 3: Group 12 CSI for CSI report 1, if configured as 'typeII-r18-coherentJT'; Part 2 subband CSI of odd subbands for CSI report 1, if configured otherwise |
| ... |
| Priority 3M: For CSI reports 1 to $N_{Rep}$, Group M0 CSI for CSI reports configured as 'typeII-r18-coherentJT'; Part 2 wideband CSI for CSI reports configured otherwise |
| Priority 3M+1: Group M1 CSI for CSI report 1, if configured as 'typeII-r18-coherentJT'; Part 2 subband CSI of even subbands for CSI report 1, if configured otherwise |
| Priority 3M+2: Group M2 CSI for CSI report 1, if configured as 'typeII-r18-coherentJT'; Part 2 subband CSI of odd subbands for CSI report 1, if configured otherwise |
| ... |
| |
| Priority $2N_{Rep}$ - 3M: Group M0 CSI for CSI report $N_{Rep}$, if configured as 'typeII-r18-coherentJT'; Part 2 subband CSI of even subbands for CSI report $N_{Rep}$, if configured otherwise |
| ... |
| Priority $2N_{Rep}$: Group M2 CSI for CSI report $N_{Rep}$, if configured as 'typeII-r18-coherentJT'; Part 2 subband CSI of odd subbands for CSI report $N_{Rep}$, if configured otherwise |

Operations of the terminal equipment are as follows:

- Step 1: the terminal side determines the multi-point joint coherent transmission scheme (CJT), CSI resource settings and reporting settings according to receiving higher-layer configuration,

  ■ configuration information is consistent with that of the network device

- Step 2: the terminal equipment receives the resources for measuring the four CSI RSs to determine CSI part I information, including but not limited to:

  ■ the terminal side receives the resources for measuring the four CSI RSs to determine 3 transmission points/CSI-RS resource selection results

  ♦ it is selected and determined that 1, 2 and 4 are optimal transmission points/CSI-RS resource selection results by measuring such channel information as large-scale RSRP, where, the TRP/CSI-RS resource selection reporting result in the CJT transmission scheme is 1101

- Step 3: the terminal side determines the CSI reporting priority based on the newly-added CSI part II reporting domain information and the first grouping information

  ■ Consistent with the network device

- Step 4: the terminal side omits a part of the CSI reporting information based on a lowest priority of CSI Part II reporting, and omits the CSI reporting from the lowest priority, until the CSI reporting code rate <= the code rate configured by the higher-layer parameter maxCodeRate.

■ Consistent with the network device

According to the embodiment of the first aspect of this disclosure, the network device is enabled to determine the part II reporting domain information in the CSI reporting field based on the CJT joint transmission, and accurately receive and demodulate the part II information based on the joint coherent transmission scheme. Furthermore, when a code rate is greater than a configured highest code rate, the network device is able to omit a part of the reporting information according to this disclosure, so as to lower the code rate, ensure correct reception and demodulation of a part of information of the CSI, improve accuracy and completeness of measurement report, and ensure data transmission performances.

Embodiments of a second aspect

At least addressed to the same problem as the embodiment of the first aspect, the embodiments of the second aspect of this disclosure provide a method for receiving channel state information, applicable to a network device, corresponding to the embodiment of the first aspect.

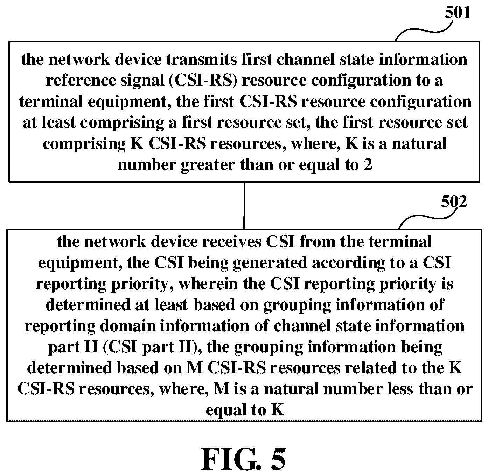

FIG. 5 is a schematic diagram of the method for receiving channel state information of the embodiment of the second aspect. As shown in FIG. 5, the method for receiving channel state information includes:

operation 501: the network device transmits first channel state information reference signal (CSI-RS) resource configuration to a terminal equipment, the first CSI-RS resource configuration at least including a first resource set, the first resource set including K CSI-RS resources, where, K is a natural number greater than or equal to 2; and
operation 502: the network device receives CSI from the terminal equipment, the CSI being generated according to a CSI reporting priority, the CSI reporting priority is determined at least based on grouping information of reporting domain information of channel state information part II (CSI part II), the grouping information being determined based on M CSI-RS resources related to the K CSI-RS resources, where, M is a natural number less than or equal to K.

In some embodiments, the CSI received by the network device is obtained by omitting a part of the CSI by the terminal equipment.
In some embodiments, the grouping information includes: first group (G0) information, second group (G1) information, and third group (G2) information.
In some embodiments, when a codebook type of the channel state information part II is configured as mode 1,

the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information includes indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or former Y1 high-priority codebook parameters for determining differential amplitude combining coefficients of the CSI-RS resources in the M CSI-RS resources, and/or former Z1 high-priority codebook parameters for determining phase combining coefficients of the CSI-RS resources in the M CSI-RS resources, where, X1, Y1 and Z1 are all natural numbers; and/or
the third group information includes latter X2 low-priority non-zero coefficients for determining the CSI-RS resources in the M CSI-RS resources, and/or latter Y2 low-priority codebook parameters for determining differential amplitude combining coefficients of the CSI-RS resources in the M CSI-RS resources, and/or latter Z2 low-priority codebook parameters for determining phase combining coefficients of the CSI-RS resources in the M CSI-RS resources, where, X2, Y2 and Z2 are all natural numbers.

In some embodiments, a value of X1 is determined according to former first number of index values having a predetermined priority relationship and ordered from lower to higher, the first number being

$$\sum_{j=1}^{M} 2L_j M_{v,j} - \left\lfloor \frac{\sum_{j=1}^{M} K_{NZ,j}}{2} \right\rfloor \text{ ; and/or}$$

a value/values of Y1 and/or Z1 is/are determined according to former second number of the index values having the predetermined priority relationship and ordered from lower to higher, the second number being

$$\max(0, \left\lceil \frac{\sum_{j=1}^{M} K_{NZ,j}}{2} \right\rceil - v); \text{ and/or}$$

a value of X2 is determined according to latter third number of the index values having the predetermined priority relationship and ordered from lower to higher, the third number being $\left\lceil \frac{\sum_{j=1}^{M} K_{NZ,j}}{2} \right\rceil$; and/or

a value/values of Y2 and/or Z2 is/are determined according to latter fourth number of the index values having the predetermined priority relationship and ordered from lower to higher, the fourth number being

$$\min\left(\left\lceil \frac{\sum_{j=1}^{M} K_{NZ,j}}{2} \right\rceil - v, \left\lfloor \frac{\sum_{j=1}^{M} K_{NZ,j}}{2} \right\rfloor\right).$$

In some embodiments, when a codebook type of the channel state information part II is configured as mode 1,

the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information includes indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former [M/2] CSI-RS resources; and/or
the third group information includes a differential amplitude combining coefficient and/or a non-zero coefficient and/or a phase combining coefficient codebook parameter for determining CSI-RS resources in latter [M/2] CSI-RS resources.

In some embodiments, when a codebook type of the channel state information part II is configured as mode 1, the second group information further includes frequency domain offset information for a strongest resource for determining the CSI-RS resources in the M resources.
In some embodiments, the strongest resource is determined according to a corresponding resource in the codebook parameter used to determine the strongest coefficient selection result to which the M CSI-RS resources correspond.
In some embodiments, when a codebook type of the channel state information part II is configured as mode 2,

the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information includes indication information for determining common frequency domain basis vectors of the M CSI-RS resources, and/or former X3 high-priority non-zero coefficients for determining the CSI-RS resources in the M CSI-RS resources, and/or reference combining coefficients for determining the M CSI-RS resources, and/or former Y3 high-priority codebook parameters for determining differential amplitude combining coefficients of the CSI-RS resources in the M CSI-RS resources, and/or former Z3 high-priority codebook parameters for determining phase combining coefficients of the CSI-RS resources in the M CSI-RS resources, where, X3, Y3 and Z3 are all natural numbers; and/or
the third group information includes latter X4 low-priority non-zero coefficients for determining indication information of frequency domain basis vectors of the CSI-RS resources in the M CSI-RS resources, and/or latter Y4 low-priority codebook parameters for determining differential amplitude combining coefficients of the CSI-RS resources in the M CSI-RS resources, and/or latter Z4 low-priority codebook parameters for determining phase combining coefficients of the CSI-RS resources in the M CSI-RS resources, where, X4, Y4 and Z4 are all natural numbers.

In some embodiments, a value of X3 is determined according to former fifth number of index values having a predetermined priority relationship and ordered from lower to higher, the fifth number being

$$\sum_{j=1}^{M} 2L_j M_v - \left\lceil \frac{\sum_{j=1}^{M} K_{NZ,j}}{2} \right\rceil; \text{ and/or}$$

a value/values of Y3 and/or Z3 is/are determined according to former second number of the index values having the predetermined priority relationship and ordered from lower to higher, the sixth number being

$$\max(0, \left\lceil \frac{\sum_{j=1}^{M} K_{NZ,j}}{2} \right\rceil - v)$$ ; and/or

a value of X4 is determined according to latter third number of the index values having the predetermined priority relationship and ordered from higher to lower, the seventh number being $\left\lfloor \frac{\sum_{j=1}^{M} K_{NZ,j}}{2} \right\rfloor$ ; and/or

a value/values of Y4 and/or Z4 is/are determined according to latter fourth number of the index values having the predetermined priority relationship and ordered from lower to higher, the eighth number being

$$\min(\left\lceil \frac{\sum_{j=1}^{M} K_{NZ,j}}{2} \right\rceil - v, \left\lfloor \frac{\sum_{j=1}^{M} K_{NZ,j}}{2} \right\rfloor)$$ .

In some embodiments, when a codebook type of the channel state information part II is configured as mode 2,

the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information includes indication information for determining common frequency domain basis vectors of the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former [M/2] CSI-RS resources; and/or
the third group information includes a differential amplitude combining coefficient and/or a non-zero coefficient and/or a phase combining coefficient codebook parameter for determining CSI-RS resources in latter [M/2] CSI-RS resources.

In some embodiments, the strongest resource is determined according to a corresponding resource in the codebook parameter used to determine the strongest coefficient selection result to which the M CSI-RS resources correspond.

In some embodiments, the grouping information includes *zero-th* group information (G0) determined based on the M CSI-RS resources, and M pieces of first group information (G10~GM0) and M pieces of second group information (G11~GM1) determined based on the resources in the M CSI-RS resources.

In some embodiments, the *zero-th* group information (G0) includes:

a codebook parameter used to determine the strongest coefficient selection result to which the M CSI-RS resources correspond; and/or
reference combining coefficients used to determine the M CSI-RS resources; and/or
indication information for determining the common frequency domain basis vectors of the M CSI-RS resources when the codebook type of the channel state information part II is configured as mode 2; and/or
a *j-th* first group information (Gj0) in the M pieces of first group information (G10~GM0) includes a codebook parameter for determining a spatial domain beam selection result to which a *j-th* CSI-RS resource corresponds, where, $1 \leq j \leq M$; and/or
a *j-th* second group information (Gj1) in the M pieces of second group information (Gl1~GM1) includes:

indication information $i_{1,5,j}$ $i_{1,6,l,j}$ used to determine a frequency domain basis vector in a *j-th* CSI-RS resource when the codebook type of the channel state information part II is configured as mode 1; and/or
indication information $i_{1,9,1,l,j-1}$ used to determine a frequency domain basis vector offset in the *j-th* CSI-RS resource when the codebook type of the channel state information part II is configured as mode 1; and/or
a differential amplitude combining coefficient and/or a non-zero coefficient and/or a phase combining coefficient codebook parameter used to determine the *j-th* CSI-RS resource.

In some embodiments, the grouping information includes *zero-th* group information (G0) determined based on the M CSI-RS resources, and M pieces of first group information (G10~GM0), M pieces of second group information (G11~GM1) and M pieces of third group information (G12~GM2) determined based on the resources in the M CSI-RS resources.

In some embodiments, the *zero-th* group information (G0) includes:

a codebook parameter used to determine the strongest coefficient selection result to which the M resources correspond; and/or

reference combining coefficients used to determine the M CSI-RS resources; and/or

indication information for determining common frequency domain basis vectors of the M CSI-RS resources when the codebook type of the channel state information part II is configured as mode 2; and/or

*j-th* first group information (Gj0) in the M pieces of first group information includes a codebook parameter $i_{1,1,j}, i_{1,2,j}$ for determining a spatial domain beam selection result to which a *j-th* CSI-RS resource corresponds, where, $1 \leq j \leq M$; and/or

*a j-th* second group information (Gj1) in the M pieces of second group information (G11~GM1) includes:

indication information $i_{1,5,j}$ $i_{1,6,l,j}$ used to determine a frequency domain basis vector in a *j-th* CSI-RS resource when the codebook type of the channel state information part II is configured as mode 1; and/or

indication information $i_{1,9,1,l,j-1}$ used to determine a frequency domain basis vector offset in the *j-th* CSI-RS resource when the codebook type of the channel state information part II is configured as mode 1; and/or

a former ninth number high priorities used to determine a differential amplitude combining coefficient of a CSI-RS resource in the *j-th* CSI-RS resource, the ninth number being $2L_j M_{v,j} - \left\lfloor \dfrac{K_{NZ,j}}{2} \right\rfloor$ ; and/or

a former tenth number of non-zero coefficients, the tenth number being $\max(0, \left\lfloor \dfrac{K_{NZ,j}}{2} \right\rfloor - v)$ ; and/or

a former eleventh number of phase combining coefficient codebook parameters, the eleventh number being

$$\max(0, \left\lfloor \dfrac{K_{NZ,j}}{2} \right\rfloor - v) ;$$ and/or

*j-th* third group information (Gj2) in the M pieces of third group information includes:

a latter twelfth number of low priorities used to determine a differential amplitude combining coefficient of a CSI-RS resource in *the j-th* CSI-RS resource, the twelfth number being $\left\lfloor \dfrac{K_{NZ,j}}{2} \right\rfloor$ ; and/or

a latter thirteenth number of low-priority non-zero coefficients, the thirteenth number being

$$\min(0, \ K_{NZ,j} - v, \left\lfloor \dfrac{K_{NZ,j}}{2} \right\rfloor) ;$$ and/or

a latter fourteenth number of low-priority phase combining coefficient codebook parameters, the fourteenth number being $\min(0, K_{NZ,j} - v, \left\lfloor \dfrac{K_{NZ,j}}{2} \right\rfloor)$ .

In some embodiments, the determining a CSI reporting priority at least based on grouping information of reporting domain information of channel state information part II (CSI part II) includes:

that priorities of first group information to which all CSI-RS resources in the M CSI-RS resources correspond respectively are higher than priorities of second group information to which all CSI-RS resources in the M CSI-RS resources correspond respectively, and

that priorities of second group information to which all CSI-RS resources in the M CSI-RS resources correspond respectively are higher than priorities of third group information to which all CSI-RS resources in the M CSI-RS resources correspond respectively.

In some embodiments, in the first group information, priorities of information corresponding to the CSI-RS resources in the M CSI-RS resources are determined according to priorities of the CSI-RS resources; and/or

in the second group information, priorities of information corresponding to the CSI-RS resources in the M CSI-RS resources are determined according to priorities of the CSI-RS resources; and/or

in the third group information, priorities of information corresponding to the CSI-RS resources in the M CSI-RS resources are determined according to priorities of the CSI-RS resources.

In some embodiments, the determining a CSI reporting priority at least based on grouping information of reporting domain information of channel state information part II (CSI part II) includes:

that a priority of the *zero-th* group information (G0) is highest,
that a priority of first group information (G10~GM0) and a priority of second group information (G11~GM1) to which a *(j+1)-th* resource in the M CSI-RS resources corresponds are higher than a priority of first group information (G10~GM0) and a priority of second group information (G11~GM1) to which a *(j-1)-th* resource in the M CSI-RS resources corresponds, where, $1 \leq j \leq M$; and
that a priority of first group information (G10~GM0) to which the *j-th* resource corresponds is higher than a priority of second group information (G11~GM1) to which the *j-th* resource corresponds.

In some embodiments, the determining a CSI reporting priority at least based on grouping information of reporting domain information of channel state information part II (CSI part II) includes:

that a priority of the *zero-th* group information (G0) is highest,
that a priority of first group information (G10~GM0), a priority of second group information (G11~GM1) and a priority of third group information (G12~GM2) to which a *(j+1)-th* resource in the M CSI-RS resources corresponds are higher than a priority of first group information (G10~GM0), a priority of second group information (G11~GM1) and a priority of third group information (G12~GM2) to which a *(j-1)-th* resource in the M CSI-RS resources corresponds, where, $1 \leq j \leq M$; and
that a priority of first group information (G10~GM0) to which the *j-th* resource corresponds is higher than a priority of second group information (G11~GM1) to which the *j-th* resource corresponds, and the priority of the second group information (G12~GM2) is higher than a priority of third group information (G12~GM2).

In some embodiments, that the M CSI-RS resources are related to the K CSI-RS resources includes:
that the M CSI-RS resources are M CSI-RS resources in the K CSI-RS resources.
In some embodiments, the M CSI-RS resources are related to the K CSI-RS resources based on:

former M resources with maximum reference signal received power (RSRP); and/or,
N resources with RSRP greater than or equal to a predetermined threshold; and/or,
former M resources with minimum block error rates (BLERs); and/or,
M resources with BLERs less than or equal to a predetermined threshold.

Embodiments of a third aspect

At least addressed to the same problem as the embodiment of the first aspect, the embodiments of the third aspect of this disclosure provide an apparatus for transmitting channel state information, applicable to a terminal equipment, corresponding to the embodiment of the first aspect.

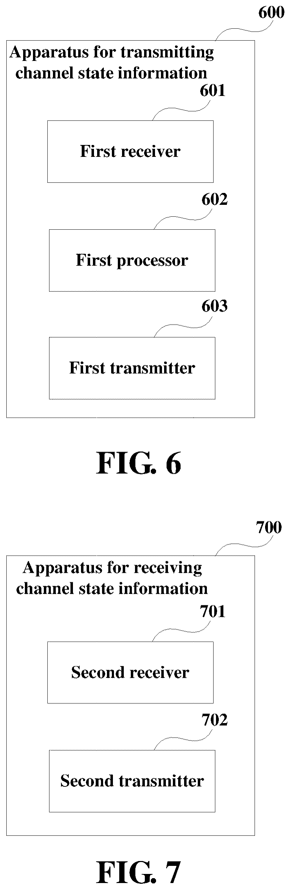

FIG. 6 is a schematic diagram of the apparatus for transmitting channel state information of the third aspect of this disclosure. As shown in FIG. 6, an apparatus 600 for transmitting channel state information includes a first receiver 601, a first processor 602 and a first transmitter 603.
In some embodiments, the first receiver 601 receives first channel state information reference signal (CSI-RS) resource configuration transmitted by a network device, the first CSI-RS resource configuration at least including a first resource set, the first resource set including K CSI-RS resources, where K is a natural number greater than or equal to 2, and the first processor 602 determines a CSI reporting priority at least based on grouping information of reporting domain information of channel state information part II (CSI part II), the grouping information being determined based on M CSI-RS resources related to the K CSI-RS resources, where, M is a natural number less than or equal to K, wherein the first processor generates CSI at least according to the CSI reporting priority.
The first transmitter 603 is configured to report the CSI.
In some embodiments, the generating CSI at least according to the CSI reporting priority includes:
omitting a part of the CSI.
In some embodiments, the grouping information includes: first group (G0) information, second group (G1) information, and third group (G2) information.
In some embodiments, when a codebook type of the channel state information part II is configured as mode 1,

the first group information includes a codebook parameter for determining a spatial domain beam selection result to

**EP 4 668 637 A1**

which CSI-RS resources in the M CSI-RS resources correspond, and/or a codebook parameter for determining a strongest coefficient selection result to which the M CSI-RS resources correspond; and/or

the second group information includes indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or former Y1 high-priority codebook parameters for determining differential amplitude combining coefficients of the CSI-RS resources in the M CSI-RS resources, and/or former Z1 high-priority codebook parameters for determining phase combining coefficients of the CSI-RS resources in the M CSI-RS resources, where, X1, Y1 and Z1 are all natural numbers; and/or

the third group information includes latter X2 low-priority non-zero coefficients for determining the CSI-RS resources in the M CSI-RS resources, and/or latter Y2 low-priority codebook parameters for determining differential amplitude combining coefficients of the CSI-RS resources in the M CSI-RS resources, and/or latter Z2 low-priority codebook parameters for determining phase combining coefficients of the CSI-RS resources in the M CSI-RS resources, where, X2, Y2 and Z2 are all natural numbers.

In some embodiments, a value of X1 is determined according to former first number of index values having a predetermined priority relationship and ordered from lower to higher, the first number being

$$\sum_{j=1}^{M} 2L_j M_{v,j} - \left\lfloor \frac{\sum_{j=1}^{M} K_{NZ,j}}{2} \right\rfloor ; \text{ and/or}$$

a value/values of Y1 and/or Z1 is/are determined according to former second number of the index values having the predetermined priority relationship and ordered from lower to higher, the second number being

$$\max(0, \left\lceil \frac{\sum_{j=1}^{M} K_{NZ,j}}{2} \right\rceil - v) ; \text{ and/or}$$

a value of X2 is determined according to latter third number of the index values having the predetermined priority relationship and ordered from lower to higher, the third number being $\left\lfloor \frac{\sum_{j=1}^{M} K_{NZ,j}}{2} \right\rfloor$ ; and/or

a value/values of Y2 and/or Z2 is/are determined according to latter fourth number of the index values having the predetermined priority relationship and ordered from lower to higher, the fourth number being

$$\min(\left\lceil \frac{\sum_{j=1}^{M} K_{NZ,j}}{2} \right\rceil - v, \left\lfloor \frac{\sum_{j=1}^{M} K_{NZ,j}}{2} \right\rfloor) .$$

In some embodiments, when a codebook type of the channel state information part II is configured as mode 1,

the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or

the second group information includes indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former $\lceil M/2 \rceil$ CSI-RS resources; and/or

the third group information includes a differential amplitude combining coefficient and/or a non-zero coefficient and/or a phase combining coefficient codebook parameter for determining CSI-RS resources in latter $\lceil M/2 \rceil$ CSI-RS resources.

In some embodiments, when a codebook type of the channel state information part II is configured as mode 1, the second group information further includes frequency domain offset information for a strongest resource for determining the CSI-RS resources in the M resources.

In some embodiments, the strongest resource is determined according to a corresponding resource in the

33

codebook parameter used to determine the strongest coefficient selection result to which the M CSI-RS resources correspond.

In some embodiments, when a codebook type of the channel state information part II is configured as mode 2,

the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or

the second group information includes indication information for determining common frequency domain basis vectors of the M CSI-RS resources, and/or former X3 high-priority non-zero coefficients for determining the CSI-RS resources in the M CSI-RS resources, and/or reference combining coefficients for determining the M CSI-RS resources, and/or former Y3 high-priority codebook parameters for determining differential amplitude combining coefficients of the CSI-RS resources in the M CSI-RS resources, and/or former Z3 high-priority codebook parameters for determining phase combining coefficients of the CSI-RS resources in the M CSI-RS resources, where, X3, Y3 and Z3 are all natural numbers; and/or

the third group information includes latter X4 low-priority non-zero coefficients for determining indication information of frequency domain basis vectors of the CSI-RS resources in the M CSI-RS resources, and/or latter Y4 low-priority codebook parameters for determining differential amplitude combining coefficients of the CSI-RS resources in the M CSI-RS resources, and/or latter Z4 low-priority codebook parameters for determining phase combining coefficients of the CSI-RS resources in the M CSI-RS resources, where, X4, Y4 and Z4 are all natural numbers.

In some embodiments, a value of X3 is determined according to former fifth number of index values having a predetermined priority relationship and ordered from lower to higher, the fifth number being

$$\sum_{j=1}^{M} 2L_j M_v - \left\lfloor \frac{\sum_{j=1}^{M} K_{NZ,j}}{2} \right\rfloor$$ ; and/or

a value/values of Y3 and/or Z3 is/are determined according to former second number of the index values having the predetermined priority relationship and ordered from lower to higher, the sixth number being

$$\max(0, \left\lceil \frac{\sum_{j=1}^{M} K_{NZ,j}}{2} \right\rceil - v)$$ ; and/or

a value of X4 is determined according to latter third number of the index values having the predetermined priority relationship and ordered from higher to lower, the seventh number being $$\left\lfloor \frac{\sum_{j=1}^{M} K_{NZ,j}}{2} \right\rfloor$$ ; and/or

a value/values of Y4 and/or Z4 is/are determined according to latter fourth number of the index values having the predetermined priority relationship and ordered from lower to higher, the eighth number being

$$\min(\left\lceil \frac{\sum_{j=1}^{M} K_{NZ,j}}{2} \right\rceil - v, \left\lfloor \frac{\sum_{j=1}^{M} K_{NZ,j}}{2} \right\rfloor)$$ .

In some embodiments, when a codebook type of the channel state information part II is configured as mode 2,

the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or

the second group information includes indication information for determining common frequency domain basis vectors of the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former [M/2] CSI-RS resources; and/or

the third group information includes a differential amplitude combining coefficient and/or a non-zero coefficient and/or a phase combining coefficient codebook parameter for determining CSI-RS resources in latter $[M/2]$ CSI-RS resources.

In some embodiments, the strongest resource is determined according to a corresponding resource in the codebook parameter used to determine the strongest coefficient selection result to which the M CSI-RS resources correspond.

In some embodiments, the grouping information includes *zero-th* group information (G0) determined based on the M CSI-RS resources, and M pieces of first group information (G10~GM0) and M pieces of second group information (G11~GM1) determined based on the resources in the M CSI-RS resources.

In some embodiments, the *zero-th* group information (G0) includes:

a codebook parameter used to determine the strongest coefficient selection result to which the M CSI-RS resources correspond; and/or
reference combining coefficients used to determine the M CSI-RS resources; and/or
indication information for determining the common frequency domain basis vectors of the M CSI-RS resources when the codebook type of the channel state information part II is configured as mode 2; and/or
a *j-th* first group information (Gj0) in the M pieces of first group information (G10~GM0) includes a codebook parameter for determining a spatial domain beam selection result to which a *j-th* CSI-RS resource corresponds, where, $1 \leq j \leq$ M; and/or
a *j-th* second group information (Gj1) in the M pieces of second group information (G11~GM1) includes:

indication information $i_{1,5,j}$ $i_{1,6,l,j}$ used to determine a frequency domain basis vector in a *j-th* CSI-RS resource when the codebook type of the channel state information part II is configured as mode 1; and/or
indication information $i_{1,9,1,l,j-1}$ used to determine a frequency domain basis vector offset in the *j-th* CSI-RS resource when the codebook type of the channel state information part II is configured as mode 1; and/or
a differential amplitude combining coefficient and/or a non-zero coefficient and/or a phase combining coefficient codebook parameter used to determine the *j-th* CSI-RS resource.

In some embodiments, the grouping information includes *zero-th* group information (G0) determined based on the M CSI-RS resources, and M pieces of first group information (G10~GM0), M pieces of second group information (G11~GM1) and M pieces of third group information (G12~GM2) determined based on the resources in the M CSI-RS resources.

In some embodiments, the *zero-th* group information (G0) includes:

a codebook parameter used to determine the strongest coefficient selection result to which the M resources correspond; and/or
reference combining coefficients used to determine the M CSI-RS resources; and/or
indication information for determining common frequency domain basis vectors of the M CSI-RS resources when the codebook type of the channel state information part II is configured as mode 2; and/or
*j-th* first group information (Gj0) in the M pieces of first group information includes a codebook parameter $i_{1,1,j} i_{1,2,j}$ for determining a spatial domain beam selection result to which a *j-th* CSI-RS resource corresponds, where, $1 \leq j \leq$ M; and/or
a *j-th* second group information (Gj1) in the M pieces of second group information (G11~GM1) includes:

indication information $i_{1,5,j}$ $i_{1,6,l,j}$ used to determine a frequency domain basis vector in a *j-th* CSI-RS resource when the codebook type of the channel state information part II is configured as mode 1; and/or

indication information $i_{1,9,1,l,j-1}$ used to determine a frequency domain basis vector offset in the *j-th* CSI-RS resource when the codebook type of the channel state information part II is configured as mode 1; and/or

a former ninth number high priorities used to determine a differential amplitude combining coefficient of a CSI-RS resource in the *j-th* CSI-RS resource, the ninth number being $2L_j M_{v,j} - \left\lfloor \frac{K_{NZ,j}}{2} \right\rfloor$; and/or

a former tenth number of non-zero coefficients, the tenth number being $\max(0, \left\lfloor \frac{K_{NZ,j}}{2} \right\rfloor - v)$; and/or

a former eleventh number of phase combining coefficient codebook parameters, the eleventh number being $\max(0, \left\lfloor \frac{K_{NZ,j}}{2} \right\rfloor - v)$; and/or

*j-th* third group information (Gj2) in the M pieces of third group information includes:

a latter twelfth number of low priorities used to determine a differential amplitude combining coefficient of a CSI-RS resource in *the j-th* CSI-RS resource, the twelfth number being $\left\lfloor \frac{K_{NZ,j}}{2} \right\rfloor$ ; and/or

a latter thirteenth number of low-priority non-zero coefficients, the thirteenth number being

$$\min(0,\ K_{NZ,j} - v, \left\lfloor \frac{K_{NZ,j}}{2} \right\rfloor) \text{ ; and/or}$$

a latter fourteenth number of low-priority phase combining coefficient codebook parameters, the fourteenth

number being $\min(0, K_{NZ,j} - v, \left\lfloor \frac{K_{NZ,j}}{2} \right\rfloor)$ .

In some embodiments, the determining a CSI reporting priority by the terminal equipment at least based on grouping information of reporting domain information of channel state information part II (CSI part II) includes:

that priorities of first group information to which all CSI-RS resources in the M CSI-RS resources correspond respectively are higher than priorities of second group information to which all CSI-RS resources in the M CSI-RS resources correspond respectively, and

that priorities of second group information to which all CSI-RS resources in the M CSI-RS resources correspond respectively are higher than priorities of third group information to which all CSI-RS resources in the M CSI-RS resources correspond respectively.

In some embodiments, in the first group information, priorities of information corresponding to the CSI-RS resources in the M CSI-RS resources are determined according to priorities of the CSI-RS resources; and/or

in the second group information, priorities of information corresponding to the CSI-RS resources in the M CSI-RS resources are determined according to priorities of the CSI-RS resources; and/or

in the third group information, priorities of information corresponding to the CSI-RS resources in the M CSI-RS resources are determined according to priorities of the CSI-RS resources.

In some embodiments, the determining a CSI reporting priority by the terminal equipment at least based on grouping information of reporting domain information of channel state information part II (CSI part II) includes:

that a priority of the *zero-th* group information (G0) is highest,

that a priority of first group information (G10~GM0) and a priority of second group information (G11~GM1) to which a *(j+1)-th* resource in the M CSI-RS resources corresponds are higher than a priority of first group information (G10~GM0) and a priority of second group information (G11~GM1) to which a *(j-1)-th* resource in the M CSI-RS resources corresponds, where, $1 \le j \le M$; and

that a priority of first group information (G10~GM0) to which the *j-th* resource corresponds is higher than a priority of second group information (G11~GM1) to which the *j-th* resource corresponds.

In some embodiments, the determining a CSI reporting priority by the terminal equipment at least based on grouping information of reporting domain information of channel state information part II (CSI part II) includes:

that a priority of the *zero-th* group information (G0) is highest,

that a priority of first group information (G10~GM0), a priority of second group information (G11~GM1) and a priority of third group information (G12~GM2) to which a *(j+1)-th* resource in the M CSI-RS resources corresponds are higher than a priority of first group information (G10~GM0), a priority of second group information (G11~GM1) and a priority of third group information (G12~GM2) to which a *(j-1)-th* resource in the M CSI-RS resources corresponds, where, $1 \le j \le M$; and

that a priority of first group information (G10~GM0) to which the *j-th* resource corresponds is higher than a priority of second group information (G11~GM1) to which the *j-th* resource corresponds, and the priority of the second group information (G12~GM2) to which *the j-th* resource corresponds is higher than a priority of third group information (G12~GM2) to which the *j-th* resource corresponds.

In some embodiments, that the M CSI-RS resources are related to the K CSI-RS resources includes: that the M CSI-RS resources are M CSI-RS resources in the K CSI-RS resources.
In some embodiments, the M CSI-RS resources are related to the K CSI-RS resources based on:

former M resources with maximum reference signal received power (RSRP); and/or,
N resources with RSRP greater than or equal to a predetermined threshold; and/or,
former M resources with minimum block error rates (BLERs); and/or,
M resources with BLERs less than or equal to a predetermined threshold.

Embodiments of a fourth aspect

At least addressed to the same problem as the embodiment of the second aspect, the embodiments of the fourth aspect of this disclosure provide an apparatus for receiving channel state information, applicable to a network device, corresponding to the embodiment of the second aspect.

FIG. 7 is a schematic diagram of the apparatus for transmitting channel state information of the fourth aspect of this disclosure. As shown in FIG. 7, an apparatus 700 for receiving channel state information includes a second receiver 701 and a second transmitter 702.

The second transmitter 702 transmits first channel state information reference signal (CSI-RS) resource configuration to a terminal equipment, the first CSI-RS resource configuration at least including a first resource set, the first resource set including K CSI-RS resources, where, K is a natural number greater than or equal to 2;

and the second receiver 701 receives CSI from the terminal equipment, the CSI being generated according to a CSI reporting priority, wherein the CSI reporting priority is determined at least based on grouping information of reporting domain information of channel state information part II (CSI part II), the grouping information being determined based on M CSI-RS resources related to the K CSI-RS resources, where, M is a natural number less than or equal to K.

In some embodiments, the CSI received by the second receiver is obtained by omitting a part of the CSI by the terminal equipment.

In some embodiments, the grouping information includes: first group (G0) information, second group (G1) information, and third group (G2) information.

4In some embodiments, when a codebook type of the channel state information part II is configured as mode 1, the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or

the second group information includes indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or former Y1 high-priority codebook parameters for determining differential amplitude combining coefficients of the CSI-RS resources in the M CSI-RS resources, and/or former Z1 high-priority codebook parameters for determining phase combining coefficients of the CSI-RS resources in the M CSI-RS resources, where, X1, Y1 and Z1 are all natural numbers; and/or

the third group information includes latter X2 low-priority non-zero coefficients for determining the CSI-RS resources in the M CSI-RS resources, and/or latter Y2 low-priority codebook parameters for determining differential amplitude combining coefficients of the CSI-RS resources in the M CSI-RS resources, and/or latter Z2 low-priority codebook parameters for determining phase combining coefficients of the CSI-RS resources in the M CSI-RS resources, where, X2, Y2 and Z2 are all natural numbers.

In some embodiments, a value of X1 is determined according to former first number of index values having a predetermined priority relationship and ordered from lower to higher, the first number being

$$\sum_{j=1}^{M} 2L_j M_{v,j} - \left\lfloor \frac{\sum_{j=1}^{M} K_{NZ,j}}{2} \right\rfloor ; \text{ and/or}$$

a value/values of Y1 and/or Z1 is/are determined according to former second number of the index values having the predetermined priority relationship and ordered from lower to higher, the second number being

$$\max(0, \left\lceil \frac{\sum_{j=1}^{M} K_{NZ,j}}{2} \right\rceil - v) ; \text{ and/or}$$

a value of X2 is determined according to latter third number of the index values having the predetermined priority relationship and ordered from lower to higher, the third number being $\left\lfloor \frac{\sum_{j=1}^{M} K_{NZ,j}}{2} \right\rfloor$ ; and/or

a value/values of Y2 and/or Z2 is/are determined according to latter fourth number of the index values having the predetermined priority relationship and ordered from lower to higher, the fourth number being

$$\min\left(\left\lceil\frac{\sum_{j=1}^{M} K_{NZ,j}}{2}\right\rceil - v, \left\lfloor\frac{\sum_{j=1}^{M} K_{NZ,j}}{2}\right\rfloor\right) .$$

In some embodiments, when a codebook type of the channel state information part II is configured as mode 1,

the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or

the second group information includes indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former [M/2] CSI-RS resources; and/or

the third group information includes a differential amplitude combining coefficient and/or a non-zero coefficient and/or a phase combining coefficient codebook parameter for determining CSI-RS resources in latter [M/2] CSI-RS resources.

In some embodiments, when a codebook type of the channel state information part II is configured as mode 1, the second group information further includes frequency domain offset information for a strongest resource for determining the CSI-RS resources in the M resources.

In some embodiments, the strongest resource is determined according to a corresponding resource in the codebook parameter used to determine the strongest coefficient selection result to which the M CSI-RS resources correspond.

In some embodiments, when a codebook type of the channel state information part II is configured as mode 2,

the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or

the second group information includes indication information for determining common frequency domain basis vectors of the M CSI-RS resources, and/or former X3 high-priority non-zero coefficients for determining the CSI-RS resources in the M CSI-RS resources, and/or reference combining coefficients for determining the M CSI-RS resources, and/or former Y3 high-priority codebook parameters for determining differential amplitude combining coefficients of the CSI-RS resources in the M CSI-RS resources, and/or former Z3 high-priority codebook parameters for determining phase combining coefficients of the CSI-RS resources in the M CSI-RS resources, where, X3, Y3 and Z3 are all natural numbers; and/or

the third group information includes latter X4 low-priority non-zero coefficients for determining indication information of frequency domain basis vectors of the CSI-RS resources in the M CSI-RS resources, and/or latter Y4 low-priority codebook parameters for determining differential amplitude combining coefficients of the CSI-RS resources in the M CSI-RS resources, and/or latter Z4 low-priority codebook parameters for determining phase combining coefficients of the CSI-RS resources in the M CSI-RS resources, where, X4, Y4 and Z4 are all natural numbers.

In some embodiments, a value of X3 is determined according to former fifth number of index values having a predetermined priority relationship and ordered from lower to higher, the fifth number being

$$\sum_{j=1}^{M} 2L_j M_v - \left\lceil\frac{\sum_{j=1}^{M} K_{NZ,j}}{2}\right\rceil ; \text{ and/or}$$

a value/values of Y3 and/or Z3 is/are determined according to former second number of the index values having the predetermined priority relationship and ordered from lower to higher, the sixth number being

$$\max\left(0, \left\lceil\frac{\sum_{j=1}^{M} K_{NZ,j}}{2}\right\rceil - v\right) ; \text{ and/or}$$

a value of X4 is determined according to latter third number of the index values having the predetermined priority relationship and ordered from higher to lower, the seventh number being $\left\lfloor\frac{\sum_{j=1}^{M} K_{NZ,j}}{2}\right\rfloor$ ; and/or

a value/values of Y4 and/or Z4 is/are determined according to latter fourth number of the index values having the predetermined priority relationship and ordered from lower to higher, the eighth number being

$$\min\left(\left\lceil \frac{\sum_{j=1}^{M} K_{NZ,j}}{2} \right\rceil - v, \left\lfloor \frac{\sum_{j=1}^{M} K_{NZ,j}}{2} \right\rfloor\right).$$

In some embodiments, when a codebook type of the channel state information part II is configured as mode 2,

the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or

the second group information includes indication information for determining common frequency domain basis vectors of the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former [M/2] CSI-RS resources; and/or

the third group information includes a differential amplitude combining coefficient and/or a non-zero coefficient and/or a phase combining coefficient codebook parameter for determining CSI-RS resources in latter [M/2] CSI-RS resources.

In some embodiments, the strongest resource is determined according to a corresponding resource in the codebook parameter used to determine the strongest coefficient selection result to which the M CSI-RS resources correspond.

In some embodiments, the grouping information includes *zero-th* group information (G0) determined based on the M CSI-RS resources, and M pieces of first group information (G10~GM0) and M pieces of second group information (G11~GM1) determined based on the resources in the M CSI-RS resources.

In some embodiments, the *zero-th* group information (G0) includes:

a codebook parameter used to determine the strongest coefficient selection result to which the M CSI-RS resources correspond; and/or

reference combining coefficients used to determine the M CSI-RS resources; and/or

indication information for determining the common frequency domain basis vectors of the M CSI-RS resources when the codebook type of the channel state information part II is configured as mode 2; and/or

a *j-th* first group information (Gj0) in the M pieces of first group information (G10~GM0) includes a codebook parameter for determining a spatial domain beam selection result to which a *j-th* CSI-RS resource corresponds, where, $1 \leq j \leq M$; and/or

a *j-th* second group information (Gj1) in the M pieces of second group information (G11~GM1) includes:

indication information $i_{1,5,j}$ $i_{1,6,l,j}$ used to determine a frequency domain basis vector in a *j-th* CSI-RS resource when the codebook type of the channel state information part II is configured as mode 1; and/or

indication information $i_{1,9,1,l,j-1}$ used to determine a frequency domain basis vector offset in the *j-th* CSI-RS resource when the codebook type of the channel state information part II is configured as mode 1; and/or

a differential amplitude combining coefficient and/or a non-zero coefficient and/or a phase combining coefficient codebook parameter used to determine the *j-th* CSI-RS resource.

In some embodiments, the grouping information includes *zero-th* group information (G0) determined based on the M CSI-RS resources, and M pieces of first group information (G10~GM0), M pieces of second group information (G11~GM1) and M pieces of third group information (G12~GM2) determined based on the resources in the M CSI-RS resources.

In some embodiments, the *zero-th* group information (G0) includes:

a codebook parameter used to determine the strongest coefficient selection result to which the M resources correspond; and/or

reference combining coefficients used to determine the M CSI-RS resources; and/or

indication information for determining common frequency domain basis vectors of the M CSI-RS resources when the codebook type of the channel state information part II is configured as mode 2; and/or

*j-th* first group information (Gj0) in the M pieces of first group information includes a codebook parameter $i_{1,1,j}, i_{1,2,j}$ for determining a spatial domain beam selection result to which a *j-th* CSI-RS resource corresponds, where, $1 \leq j \leq M$; and/or

a *j-th* second group information (Gj1) in the M pieces of second group information (G11~GM1) includes:

indication information $i_{1,5,j}$ $i_{1,6,l,j}$ used to determine a frequency domain basis vector in a *j-th* CSI-RS resource when the codebook type of the channel state information part II is configured as mode 1; and/or

indication information $i_{1,9,1,l,j-1}$ used to determine a frequency domain basis vector offset in the *j-th* CSI-RS resource when the codebook type of the channel state information part II is configured as mode 1; and/or

a former ninth number high priorities used to determine a differential amplitude combining coefficient of a CSI-RS resource in the *j-th* CSI-RS resource, the ninth number being $2L_j M_{v,j} - \left\lfloor \dfrac{K_{NZ,j}}{2} \right\rfloor$ ; and/or

a former tenth number of non-zero coefficients, the tenth number being $\max(0, \left\lfloor \dfrac{K_{NZ,j}}{2} \right\rfloor - v)$ ; and/or

a former eleventh number of phase combining coefficient codebook parameters, the eleventh number being $\max(0, \left\lfloor \dfrac{K_{NZ,j}}{2} \right\rfloor - v);$ ; and/or

*j-th* third group information (Gj2) in the M pieces of third group information includes:

a latter twelfth number of low priorities used to determine a differential amplitude combining coefficient of a CSI-RS resource in *the j-th* CSI-RS resource, the twelfth number being $\left\lfloor \dfrac{K_{NZ,j}}{2} \right\rfloor$ ; and/or

a latter thirteenth number of low-priority non-zero coefficients, the thirteenth number being $\min(0, K_{NZ,j} - v, \left\lfloor \dfrac{K_{NZ,j}}{2} \right\rfloor)$ ; and/or

a latter fourteenth number of low-priority phase combining coefficient codebook parameters, the fourteenth number being $\min(0, K_{NZ,j} - v, \left\lfloor \dfrac{K_{NZ,j}}{2} \right\rfloor)$ .

In some embodiments, the determining a CSI reporting priority at least based on grouping information of reporting domain information of channel state information part II (CSI part II) includes:

that priorities of first group information to which all CSI-RS resources in the M CSI-RS resources correspond respectively are higher than priorities of second group information to which all CSI-RS resources in the M CSI-RS resources correspond respectively, and
that priorities of second group information to which all CSI-RS resources in the M CSI-RS resources correspond respectively are higher than priorities of third group information to which all CSI-RS resources in the M CSI-RS resources correspond respectively.

In some embodiments, in the first group information, priorities of information corresponding to the CSI-RS resources in the M CSI-RS resources are determined according to priorities of the CSI-RS resources; and/or

in the second group information, priorities of information corresponding to the CSI-RS resources in the M CSI-RS resources are determined according to priorities of the CSI-RS resources; and/or
in the third group information, priorities of information corresponding to the CSI-RS resources in the M CSI-RS resources are determined according to priorities of the CSI-RS resources.

In some embodiments, the determining a CSI reporting priority at least based on grouping information of reporting domain information of channel state information part II (CSI part II) includes:

that a priority of the *zero-th* group information (G0) is highest,
that a priority of first group information (G10~GM0) and a priority of second group information (G11~GM1) to which a *(j+1)-th* resource in the M CSI-RS resources corresponds are higher than a priority of first group information (G10~GM0) and a priority of second group information (G11~GM1) to which a *(j-1)-th* resource in the M CSI-RS resources corresponds, where, $1 \leq j \leq M$; and

that a priority of first group information (G10~GM0) to which the *j-th* resource corresponds is higher than a priority of second group information (G11~GM1) to which the *j-th* resource corresponds.

In some embodiments, the determining a CSI reporting priority at least based on grouping information of reporting domain information of channel state information part II (CSI part II) includes:

that a priority of the *zero-th* group information (G0) is highest,
that a priority of first group information (G10~GM0), a priority of second group information (G11~GM1) and a priority of third group information (G12~GM2) to which a *(j+1)-th* resource in the M CSI-RS resources corresponds are higher than a priority of first group information (G10~GM0), a priority of second group information (G11~GM1) and a priority of third group information (G12~GM2) to which a *(j-1)-th* resource in the M CSI-RS resources corresponds, where, $1 \leq j \leq$ M; and
that a priority of first group information (G10~GM0) to which the *j-th* resource corresponds is higher than a priority of second group information (G11~GM1) to which the *j-th* resource corresponds, and the priority of the second group information (G12~GM2) is higher than a priority of third group information (G12~GM2).

In some embodiments, that the M CSI-RS resources are related to the K CSI-RS resources includes:
that the M CSI-RS resources are M CSI-RS resources in the K CSI-RS resources.
In some embodiments, the M CSI-RS resources are related to the K CSI-RS resources based on:

former M resources with maximum reference signal received power (RSRP); and/or,
N resources with RSRP greater than or equal to a predetermined threshold; and/or,
former M resources with minimum block error rates (BLERs); and/or,
M resources with BLERs less than or equal to a predetermined threshold.

Embodiments of a fifth aspect

The embodiments of the fifth aspect of this disclosure provide a communication system, including a network device and a terminal equipment.

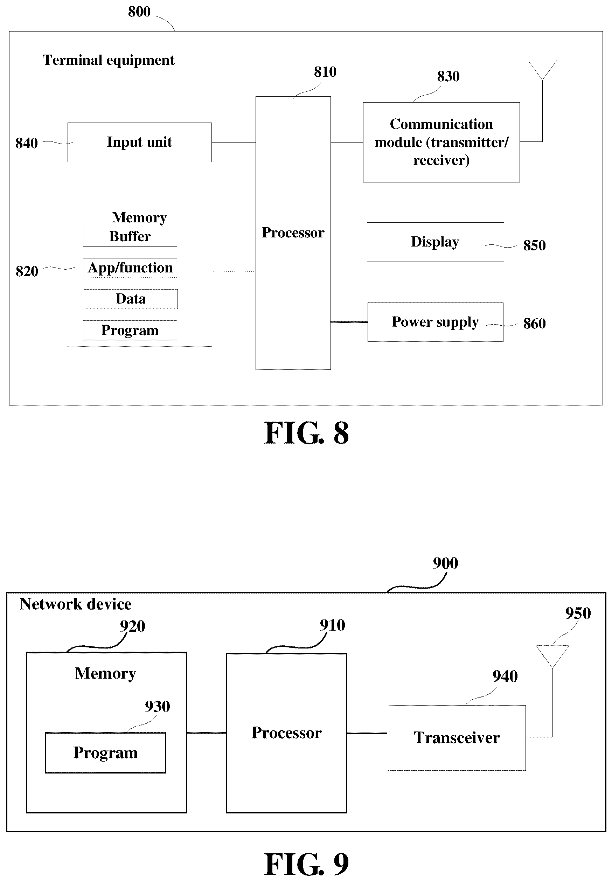

FIG. 8 is a schematic diagram of the terminal equipment of embodiments of the fifth aspect of this disclosure. As shown in FIG. 8, a terminal equipment 800 (such as corresponding to the terminal equipment 202 in FIG. 2) may include a processor 810 and a memory 820, the memory 820 storing data and a program and being coupled to the processor 810. It should be noted that this figure is illustrative only, and other types of structures may also be used, so as to supplement or replace this structure and achieve a telecommunications function or other functions.
For example, the processor 810 may be configured to execute a program to carry out the method described in the embodiment of the first aspect.
As shown in FIG. 8, the terminal equipment 800 may further include a communication module 830, an input unit 840, a display 850, and a power supply 860, wherein functions of the above components are similar to those in the related art, which shall not be described herein any further. It should be noted that the terminal equipment 800 does not necessarily include all the parts shown in FIG. 8, and the above components are not necessary. Furthermore, the terminal equipment 800 may include parts not shown in FIG. 8, and the related art may be referred to.
FIG. 9 is a schematic diagram of the network device of the embodiments of the third aspect. As shown in FIG. 9, the network device 900 (such as corresponding to the network device 201 in FIG. 2) may include a processor 910 (such as a central processing unit (CPU) and a memory 920, the memory 920 being coupled to the central processing unit 910. The memory 920 may store various data, and furthermore, it may store a program 930 for information processing, and execute the program under control of the central processing unit 910.
For example, the central processing unit 910 may be configured to execute a program to carry out the method described in the embodiment of the first aspect.
Furthermore, as shown in FIG. 9, the network device 900 may include a transceiver 940, and an antenna 950, etc. Functions of the above components are similar to those in the related art, and shall not be described herein any further. It should be noted that the network device 900 does not necessarily include all the parts shown in FIG. 9, and furthermore, the network device 900 may include parts not shown in FIG. 9, and the related art may be referred to.
An embodiment of this disclosure provides a computer readable program, which, when executed in a terminal equipment, causes the terminal equipment to carry out the method as described in the embodiment of the first aspect.
An embodiment of this disclosure provides a computer storage medium, including a computer readable program, which causes a terminal equipment to carry out the method as described in the embodiment of the first aspect.
The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.

A method at a terminal equipment side:

1. A method for transmitting channel state information, applicable to a terminal equipment, the method including:

receiving, by the terminal equipment, first channel state information reference signal (CSI-RS) resource configuration transmitted by a network device, the first CSI-RS resource configuration at least including a first resource set, the first resource set including K CSI-RS resources, where, K is a natural number greater than or equal to 2;

determining a CSI reporting priority by the terminal equipment at least based on grouping information of reporting domain information of channel state information part II (CSI part II), the grouping information being determined based on M CSI-RS resources related to the K CSI-RS resources, where, M is a natural number less than or equal to K; and

generating CSI by the terminal equipment at least according to the CSI reporting priority.

2. The method according to supplement 1, wherein the generating CSI by the terminal equipment at least according to the CSI reporting priority includes:

omitting a part of the CSI by the terminal equipment.

3. The method according to supplement 1, wherein,

the grouping information includes: first group (G0) information, second group (G1) information, and third group (G2) information.

4. The method according to supplement 3, wherein,

when a codebook type of the channel state information part II is configured as mode 1,

the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or

the second group information includes indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or former Y1 high-priority codebook parameters for determining differential amplitude combining coefficients of the CSI-RS resources in the M CSI-RS resources, and/or former Z1 high-priority codebook parameters for determining phase combining coefficients of the CSI-RS resources in the M CSI-RS resources, where, X1, Y1 and Z1 are all natural numbers; and/or

the third group information includes latter X2 low-priority non-zero coefficients for determining the CSI-RS resources in the M CSI-RS resources, and/or latter Y2 low-priority codebook parameters for determining differential amplitude combining coefficients of the CSI-RS resources in the M CSI-RS resources, and/or latter Z2 low-priority codebook parameters for determining phase combining coefficients of the CSI-RS resources in the M CSI-RS resources, where, X2, Y2 and Z2 are all natural numbers.

5. The method according to supplement 4, wherein,

a value of X1 is determined according to former first number of index values having a predetermined priority relationship and ordered from lower to higher, the first number being $\sum_{j=1}^{M} 2L_j M_{v,j} - \left\lceil \frac{\sum_{j=1}^{M} K_{NZ,j}}{2} \right\rceil$ ; and/or

a value/values of Y1 and/or Z1 is/are determined according to former second number of the index values having the predetermined priority relationship and ordered from lower to higher, the second number being

$$\max(0, \left\lceil \frac{\sum_{j=1}^{M} K_{NZ,j}}{2} \right\rceil - v)$$ ; and/or

a value of X2 is determined according to latter third number of the index values having the predetermined priority relationship and ordered from lower to higher, the third number being $\left\lfloor \frac{\sum_{j=1}^{M} K_{NZ,j}}{2} \right\rfloor$ ; and/or

a value/values of Y2 and/or Z2 is/are determined according to latter fourth number of the index values having the predetermined priority relationship and ordered from lower to higher, the fourth number being

$$\min(\left\lceil \frac{\sum_{j=1}^{M} K_{NZ,j}}{2} \right\rceil - v, \left\lfloor \frac{\sum_{j=1}^{M} K_{NZ,j}}{2} \right\rfloor)$$ .

6. The method according to supplement 3, wherein,

when a codebook type of the channel state information part II is configured as mode 1,
the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information includes indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former [M/2] CSI-RS resources; and/or
the third group information includes a differential amplitude combining coefficient and/or a non-zero coefficient and/or a phase combining coefficient codebook parameter for determining CSI-RS resources in latter [M/2] CSI-RS resources.

7. The method according to supplement 4, wherein,

when a codebook type of the channel state information part II is configured as mode 1,
the second group information further includes frequency domain offset information for a strongest resource for determining the CSI-RS resources in the M resources.

8. The method according to any one of supplements 4-7, wherein,
the strongest resource is determined according to a corresponding resource in the codebook parameter used to determine the strongest coefficient selection result to which the M CSI-RS resources correspond.
9. The method according to supplement 3, wherein,

when a codebook type of the channel state information part II is configured as mode 2,
the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information includes indication information for determining common frequency domain basis vectors of the M CSI-RS resources, and/or former X3 high-priority non-zero coefficients for determining the CSI-RS resources in the M CSI-RS resources, and/or reference combining coefficients for determining the M CSI-RS resources, and/or former Y3 high-priority codebook parameters for determining differential amplitude combining coefficients of the CSI-RS resources in the M CSI-RS resources, and/or former Z3 high-priority codebook parameters for determining phase combining coefficients of the CSI-RS resources in the M CSI-RS resources, where, X3, Y3 and Z3 are all natural numbers; and/or
the third group information includes latter X4 low-priority non-zero coefficients for determining indication information of frequency domain basis vectors of the CSI-RS resources in the M CSI-RS resources, and/or latter Y4 low-priority codebook parameters for determining differential amplitude combining coefficients of the CSI-RS resources in the M CSI-RS resources, and/or latter Z4 low-priority codebook parameters for determining phase combining coefficients of the CSI-RS resources in the M CSI-RS resources, where, X4, Y4 and Z4 are all natural numbers.

10. The method according to supplement 9, wherein,

a value of X3 is determined according to former fifth number of index values having a predetermined priority relationship and ordered from lower to higher, the fifth number being $\sum_{j=1}^{M} 2L_j M_v - \left\lfloor \frac{\sum_{j=1}^{M} K_{NZ,j}}{2} \right\rfloor$ ; and/or

a value/values of Y3 and/or Z3 is/are determined according to former second number of the index values having the predetermined priority relationship and ordered from lower to higher, the sixth number being $\max(0, \left\lceil \frac{\sum_{j=1}^{M} K_{NZ,j}}{2} \right\rceil - v)$ ; and/or

a value of X4 is determined according to latter third number of the index values having the predetermined priority relationship and ordered from higher to lower, the seventh number being $\left\lfloor \frac{\sum_{j=1}^{M} K_{NZ,j}}{2} \right\rfloor$ ; and/or

a value/values of Y4 and/or Z4 is/are determined according to latter fourth number of the index values having the predetermined priority relationship and ordered from lower to higher, the eighth number being $\min(\left\lceil \frac{\sum_{j=1}^{M} K_{NZ,j}}{2} \right\rceil - v, \left\lfloor \frac{\sum_{j=1}^{M} K_{NZ,j}}{2} \right\rfloor)$ .

11. The method according to supplement 3, wherein,

when a codebook type of the channel state information part II is configured as mode 2,
the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information includes indication information for determining common frequency domain basis vectors of the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former [M/2] CSI-RS resources; and/or
the third group information includes a differential amplitude combining coefficient and/or a non-zero coefficient and/or a phase combining coefficient codebook parameter for determining CSI-RS resources in latter [M/2] CSI-RS resources.

12. The method according to any one of supplements 9-11, wherein,
the strongest resource is determined according to a corresponding resource in the codebook parameter used to determine the strongest coefficient selection result to which the M CSI-RS resources correspond.

13. The method according to supplement 1, wherein,
the grouping information includes *zero-th* group information (G0) determined based on the M CSI-RS resources, and M pieces of first group information (G10~GM0) and M pieces of second group information (G11~GM1) determined based on the resources in the M CSI-RS resources.

14. The method according to supplement 13, wherein,
the *zero-th* group information (G0) includes:

> a codebook parameter used to determine the strongest coefficient selection result to which the M CSI-RS resources correspond; and/or
> reference combining coefficients used to determine the M CSI-RS resources; and/or
> indication information for determining the common frequency domain basis vectors of the M CSI-RS resources when the codebook type of the channel state information part II is configured as mode 2; and/or
> a *j-th* first group information (Gj0) in the M pieces of first group information (G10~GM0) includes a codebook parameter for determining a spatial domain beam selection result to which a *j-th* CSI-RS resource corresponds, where, $1 \leq j \leq M$; and/or
> a *j-th* second group information (Gj1) in the M pieces of second group information (G11~GM1) includes:

>> indication information $i_{1,5,j} i_{1,6,l,j}$ used to determine a frequency domain basis vector in a *j-th* CSI-RS resource when the codebook type of the channel state information part II is configured as mode 1; and/or
>> indication information $i_{1,9,1,l,j-1}$ used to determine a frequency domain basis vector offset in the *j-th* CSI-RS resource when the codebook type of the channel state information part II is configured as mode 1; and/or
>> a differential amplitude combining coefficient and/or a non-zero coefficient and/or a phase combining coefficient codebook parameter used to determine the *j-th* CSI-RS resource.

15. The method according to supplement 1, wherein,
the grouping information includes *zero-th* group information (G0) determined based on the M CSI-RS resources, and M pieces of first group information (G10~GM0), M pieces of second group information (G11~GM1) and M pieces of third group information (G12~GM2) determined based on the resources in the M CSI-RS resources.

16. The method according to supplement 15, wherein,
the *zero-th* group information (G0) includes:

> a codebook parameter used to determine the strongest coefficient selection result to which the M resources correspond; and/or
> reference combining coefficients used to determine the M CSI-RS resources; and/or
> indication information for determining common frequency domain basis vectors of the M CSI-RS resources when the codebook type of the channel state information part II is configured as mode 2; and/or
> *j-th* first group information (Gj0) in the M pieces of first group information includes a codebook parameter $i_{1,1,j} i_{1,2,j}$ for determining a spatial domain beam selection result to which a *j-th* CSI-RS resource corresponds, where, $1 \leq j \leq M$; and/or
> a *j-th* second group information (Gj1) in the M pieces of second group information (G11~GM1) includes:

>> indication information $i_{1,5,j} i_{1,6,l,j}$ used to determine a frequency domain basis vector in a *j-th* CSI-RS resource when the codebook type of the channel state information part II is configured as mode 1; and/or

>> indication information $i_{1,9,1,l,j-1}$ used to determine a frequency domain basis vector offset in the *j-th* CSI-RS resource when the codebook type of the channel state information part II is configured as mode 1; and/or

>> a former ninth number high priorities used to determine a differential amplitude combining coefficient of a CSI-RS resource in the *j-th* CSI-RS resource, the ninth number being $2L_j M_{v,j} - \left\lfloor \frac{K_{NZ,j}}{2} \right\rfloor$; and/or

>> a former tenth number of non-zero coefficients, the tenth number being $\max(0, \left\lfloor \frac{K_{NZ,j}}{2} \right\rfloor - v)$; and/or

>> a former eleventh number of phase combining coefficient codebook parameters, the eleventh number being $\max(0, \left\lfloor \frac{K_{NZ,j}}{2} \right\rfloor - v)$; and/or

> *j-th* third group information (Gj2) in the M pieces of third group information includes:

a latter twelfth number of low priorities used to determine a differential amplitude combining coefficient of a CSI-RS resource in the *j-th* CSI-RS resource, the twelfth number being $\left\lceil \frac{K_{NZ,j}}{2} \right\rceil$ ; and/or

a latter thirteenth number of low-priority non-zero coefficients, the thirteenth number being

$$\min(0, \ K_{NZ,j} - v, \left\lceil \frac{K_{NZ,j}}{2} \right\rceil) \ ; \text{and/or}$$

a latter fourteenth number of low-priority phase combining coefficient codebook parameters, the fourteenth number being $\min(0, K_{NZ,j} - v, \left\lceil \frac{K_{NZ,j}}{2} \right\rceil)$ .

17. The method according to supplement 3, wherein,
the determining a CSI reporting priority by the terminal equipment at least based on grouping information of reporting domain information of channel state information part II (CSI part II) includes:

   that priorities of first group information to which all CSI-RS resources in the M CSI-RS resources correspond respectively are higher than priorities of second group information to which all CSI-RS resources in the M CSI-RS resources correspond respectively, and
   that priorities of second group information to which all CSI-RS resources in the M CSI-RS resources correspond respectively are higher than priorities of third group information to which all CSI-RS resources in the M CSI-RS resources correspond respectively.

18. The method according to supplement 17, wherein,

   in the first group information, priorities of information corresponding to the CSI-RS resources in the M CSI-RS resources are determined according to priorities of the CSI-RS resources; and/or
   in the second group information, priorities of information corresponding to the CSI-RS resources in the M CSI-RS resources are determined according to priorities of the CSI-RS resources; and/or
   in the third group information, priorities of information corresponding to the CSI-RS resources in the M CSI-RS resources are determined according to priorities of the CSI-RS resources.

19. The method according to supplement 13 or 14, wherein,
the determining a CSI reporting priority by the terminal equipment at least based on grouping information of reporting domain information of channel state information part II (CSI part II) includes:

   that a priority of the *zero-th* group information (G0) is highest,
   that a priority of first group information (G10~GM0) and a priority of second group information (G11~GM1) to which a *(j+1)-th* resource in the M CSI-RS resources corresponds are higher than a priority of first group information (G10~GM0) and a priority of second group information (G11~GM1) to which a *(j-1)-th* resource in the M CSI-RS resources corresponds, where, $1 \leq j \leq M$; and
   that a priority of first group information (G10~GM0) to which the *j-th* resource corresponds is higher than a priority of second group information (G11~GM1) to which the *j-th* resource corresponds.

20. The method according to supplement 15 or 16, wherein,
the determining a CSI reporting priority by the terminal equipment at least based on grouping information of reporting domain information of channel state information part II (CSI part II) includes:

   that a priority of the *zero-th* group information (G0) is highest,
   that a priority of first group information (G10~GM0), a priority of second group information (G11~GM1) and a priority of third group information (G12~GM2) to which a *(j+1)-th* resource in the M CSI-RS resources corresponds are higher than a priority of first group information (G10~GM0), a priority of second group information (G11~GM1) and a priority of third group information (G12~GM2) to which a *(j-1)-th* resource in the M CSI-RS resources corresponds, where, $1 \leq j \leq M$; and
   that a priority of first group information (G10~GM0) to which *the j-th* resource corresponds is higher than a priority of second group information (G11~GM1) to which the *j-th* resource corresponds, and the priority of the second group information (G12~GM2) to which *the j-th* resource corresponds is higher than a priority of third group information (G12~GM2) to which *the j-th* resource corresponds.

21. The method according to supplement 1, wherein that the M CSI-RS resources are related to the K CSI-RS resources includes:

that the M CSI-RS resources are M CSI-RS resources in the K CSI-RS resources.

22. The method according to supplement 21, wherein,

the M CSI-RS resources are related to the K CSI-RS resources based on:

> former M resources with maximum reference signal received power (RSRP); and/or,
> N resources with RSRP greater than or equal to a predetermined threshold; and/or,
> former M resources with minimum block error rates (BLERs); and/or,
> M resources with BLERs less than or equal to a predetermined threshold.

A method at a network device side:

1. A method for transmitting channel state information, applicable to a network device, the method including:

> transmitting first channel state information reference signal (CSI-RS) resource configuration by the network device to a terminal equipment, the first CSI-RS resource configuration at least including a first resource set, the first resource set including K CSI-RS resources, where, K is a natural number greater than or equal to 2; and
> receiving CSI by the network device from the terminal equipment, the CSI being generated according to a CSI reporting priority,
> wherein the CSI reporting priority is determined at least based on grouping information of reporting domain information of channel state information part II (CSI part II), the grouping information being determined based on M CSI-RS resources related to the K CSI-RS resources, where, M is a natural number less than or equal to K.

2. The method according to supplement 1, wherein,

the CSI received by the network device is obtained by omitting a part of the CSI by the terminal equipment.

3. The method according to supplement 1, wherein,

the grouping information includes: first group (G0) information, second group (G1) information, and third group (G2) information.

4. The method according to supplement 3, wherein,

> when a codebook type of the channel state information part II is configured as mode 1,
> the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
> the second group information includes indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or former Y1 high-priority codebook parameters for determining differential amplitude combining coefficients of the CSI-RS resources in the M CSI-RS resources, and/or former Z1 high-priority codebook parameters for determining phase combining coefficients of the CSI-RS resources in the M CSI-RS resources, where, X1, Y1 and Z1 are all natural numbers; and/or
> the third group information includes latter X2 low-priority non-zero coefficients for determining the CSI-RS resources in the M CSI-RS resources, and/or latter Y2 low-priority codebook parameters for determining differential amplitude combining coefficients of the CSI-RS resources in the M CSI-RS resources, and/or latter Z2 low-priority codebook parameters for determining phase combining coefficients of the CSI-RS resources in the M CSI-RS resources, where, X2, Y2 and Z2 are all natural numbers.

5. The method according to supplement 4, wherein,

> a value of X1 is determined according to former first number of index values having a predetermined priority relationship and ordered from lower to higher, the first number being $\sum_{j=1}^{M} 2L_j M_{v,j} - \left\lceil \frac{\sum_{j=1}^{M} K_{NZ,j}}{2} \right\rceil$; and/or
>
> a value/values of Y1 and/or Z1 is/are determined according to former second number of the index values having the predetermined priority relationship and ordered from lower to higher, the second number being
>
> $$\max(0, \left\lceil \frac{\sum_{j=1}^{M} K_{NZ,j}}{2} \right\rceil - v)\text{; and/or}$$

a value of X2 is determined according to latter third number of the index values having the predetermined priority relationship and ordered from lower to higher, the third number being $\left\lceil \dfrac{\Sigma_{j=1}^{M} K_{NZ,j}}{2} \right\rceil$ ; and/or

a value/values of Y2 and/or Z2 is/are determined according to latter fourth number of the index values having the predetermined priority relationship and ordered from lower to higher, the fourth number being

$$\min\left(\left\lceil \frac{\Sigma_{j=1}^{M} K_{NZ,j}}{2} \right\rceil - v, \left\lceil \frac{\Sigma_{j=1}^{M} K_{NZ,j}}{2} \right\rceil\right).$$

6. The method according to supplement 3, wherein,

when a codebook type of the channel state information part II is configured as mode 1,
the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information includes indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former [M/2] CSI-RS resources; and/or
the third group information includes a differential amplitude combining coefficient and/or a non-zero coefficient and/or a phase combining coefficient codebook parameter for determining CSI-RS resources in latter [M/2] CSI-RS resources.

7. The method according to supplement 4, wherein,

when a codebook type of the channel state information part II is configured as mode 1,
the second group information further includes frequency domain offset information for a strongest resource for determining the CSI-RS resources in the M resources.

8. The method according to any one of supplements 4-7, wherein,
the strongest resource is determined according to a corresponding resource in the codebook parameter used to determine the strongest coefficient selection result to which the M CSI-RS resources correspond.
9. The method according to supplement 3, wherein,

when a codebook type of the channel state information part II is configured as mode 2,
the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information includes indication information for determining common frequency domain basis vectors of the M CSI-RS resources, and/or former X3 high-priority non-zero coefficients for determining the CSI-RS resources in the M CSI-RS resources, and/or reference combining coefficients for determining the M CSI-RS resources, and/or former Y3 high-priority codebook parameters for determining differential amplitude combining coefficients of the CSI-RS resources in the M CSI-RS resources, and/or former Z3 high-priority codebook parameters for determining phase combining coefficients of the CSI-RS resources in the M CSI-RS resources, where, X3, Y3 and Z3 are all natural numbers; and/or
the third group information includes latter X4 low-priority non-zero coefficients for determining indication information of frequency domain basis vectors of the CSI-RS resources in the M CSI-RS resources, and/or latter Y4 low-priority codebook parameters for determining differential amplitude combining coefficients of the CSI-RS resources in the M CSI-RS resources, and/or latter Z4 low-priority codebook parameters for determining phase combining coefficients of the CSI-RS resources in the M CSI-RS resources, where, X4, Y4 and Z4 are all natural numbers.

10. The method according to supplement 9, wherein,

a value of X3 is determined according to former fifth number of index values having a predetermined priority relationship and ordered from lower to higher, the fifth number being $\sum_{j=1}^{M} 2L_j M_v - \left\lfloor \dfrac{\sum_{j=1}^{M} K_{NZ,j}}{2} \right\rfloor$ ; and/or

a value/values of Y3 and/or Z3 is/are determined according to former second number of the index values having the predetermined priority relationship and ordered from lower to higher, the sixth number being $\max(0, \left\lceil \dfrac{\sum_{j=1}^{M} K_{NZ,j}}{2} \right\rceil - v)$ ; and/or

a value of X4 is determined according to latter third number of the index values having the predetermined priority relationship and ordered from higher to lower, the seventh number being $\left\lfloor \dfrac{\sum_{j=1}^{M} K_{NZ,j}}{2} \right\rfloor$ ; and/or

a value/values of Y4 and/or Z4 is/are determined according to latter fourth number of the index values having the predetermined priority relationship and ordered from lower to higher, the eighth number being $\min(\left\lceil \dfrac{\sum_{j=1}^{M} K_{NZ,j}}{2} \right\rceil - v, \left\lfloor \dfrac{\sum_{j=1}^{M} K_{NZ,j}}{2} \right\rfloor)$ .

11. The method according to supplement 3, wherein,

when a codebook type of the channel state information part II is configured as mode 2,
the first group information includes a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information includes indication information for determining common frequency domain basis vectors of the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former [M/2] CSI-RS resources; and/or
the third group information includes a differential amplitude combining coefficient and/or a non-zero coefficient and/or a phase combining coefficient codebook parameter for determining CSI-RS resources in latter [M/2] CSI-RS resources.

12. The method according to any one of supplements 9-11, wherein,
the strongest resource is determined according to a corresponding resource in the codebook parameter used to determine the strongest coefficient selection result to which the M CSI-RS resources correspond.

13. The method according to supplement 1, wherein,
the grouping information includes *zero-th* group information (G0) determined based on the M CSI-RS resources, and M pieces of first group information (G10~GM0) and M pieces of second group information (G11~GM1) determined based on the resources in the M CSI-RS resources.

14. The method according to supplement 13, wherein,
the *zero-th* group information (G0) includes:

a codebook parameter used to determine the strongest coefficient selection result to which the M CSI-RS resources correspond; and/or
reference combining coefficients used to determine the M CSI-RS resources; and/or
indication information for determining the common frequency domain basis vectors of the M CSI-RS resources when the codebook type of the channel state information part II is configured as mode 2; and/or
*a j-th* first group information (Gj0) in the M pieces of first group information (G10~GM0) includes a codebook parameter for determining a spatial domain beam selection result to which a *j-th* CSI-RS resource corresponds, where, $1 \le j \le M$; and/or
a *j-th* second group information (Gj1) in the M pieces of second group information (G11~GM1) includes:

indication information $i_{1,5,j}$ $i_{1,6,l,j}$ used to determine a frequency domain basis vector in a *j-th* CSI-RS resource when the codebook type of the channel state information part II is configured as mode 1; and/or
indication information $i_{1,9,1,l,j-1}$ used to determine a frequency domain basis vector offset in the *j-th* CSI-RS resource when the codebook type of the channel state information part II is configured as mode 1; and/or
a differential amplitude combining coefficient and/or a non-zero coefficient and/or a phase combining coefficient codebook parameter used to determine the *j-th* CSI-RS resource.

15. The method according to supplement 1, wherein,
the grouping information includes *zero-th* group information (G0) determined based on the M CSI-RS resources, and M pieces of first group information (G10~GM0), M pieces of second group information (G11~GM1) and M pieces of third group information (G12~GM2) determined based on the resources in the M CSI-RS resources.

16. The method according to supplement 15, wherein,
the *zero-th* group information (G0) includes:

a codebook parameter used to determine the strongest coefficient selection result to which the M resources correspond; and/or
reference combining coefficients used to determine the M CSI-RS resources; and/or
indication information for determining common frequency domain basis vectors of the M CSI-RS resources when the codebook type of the channel state information part II is configured as mode 2; and/or
*j-th* first group information (Gj0) in the M pieces of first group information includes a codebook parameter $i_{1,1,j}, i_{1,2,j}$ for determining a spatial domain beam selection result to which a *j-th* CSI-RS resource corresponds, where, $1 \leq j \leq M$; and/or
a *j-th* second group information (Gj1) in the M pieces of second group information (G11~GM1) includes:

indication information $i_{1,5,j} i_{1,6,l,j}$ used to determine a frequency domain basis vector in a *j-th* CSI-RS resource when the codebook type of the channel state information part II is configured as mode 1; and/or

indication information $i_{1,9,1,l,j-1}$ used to determine a frequency domain basis vector offset in the *j-th* CSI-RS resource when the codebook type of the channel state information part II is configured as mode 1; and/or

a former ninth number high priorities used to determine a differential amplitude combining coefficient of a CSI-RS resource in the *j-th* CSI-RS resource, the ninth number being $2L_j M_{v,j} - \left\lfloor \dfrac{K_{NZ,j}}{2} \right\rfloor$; and/or

a former tenth number of non-zero coefficients, the tenth number being $\max(0, \left\lfloor \dfrac{K_{NZ,j}}{2} \right\rfloor - v)$; and/or

a former eleventh number of phase combining coefficient codebook parameters, the eleventh number being $\max(0, \left\lfloor \dfrac{K_{NZ,j}}{2} \right\rfloor - v)$; and/or

*j-th* third group information (Gj2) in the M pieces of third group information includes:

a latter twelfth number of low priorities used to determine a differential amplitude combining coefficient of a CSI-RS resource in *the j-th* CSI-RS resource, the twelfth number being $\left\lfloor \dfrac{K_{NZ,j}}{2} \right\rfloor$; and/or

a latter thirteenth number of low-priority non-zero coefficients, the thirteenth number being $\min(0, K_{NZ,j} - v, \left\lfloor \dfrac{K_{NZ,j}}{2} \right\rfloor)$; and/or

a latter fourteenth number of low-priority phase combining coefficient codebook parameters, the fourteenth number being $\min(0, K_{NZ,j} - v, \left\lfloor \dfrac{K_{NZ,j}}{2} \right\rfloor)$.

17. The method according to supplement 3, wherein,
the determining a CSI reporting priority at least based on grouping information of reporting domain information of channel state information part II (CSI part II) includes:

that priorities of first group information to which all CSI-RS resources in the M CSI-RS resources correspond respectively are higher than priorities of second group information to which all CSI-RS resources in the M CSI-RS resources correspond respectively, and
that priorities of second group information to which all CSI-RS resources in the M CSI-RS resources correspond respectively are higher than priorities of third group information to which all CSI-RS resources in the M CSI-RS resources correspond respectively.

18. The method according to supplement 17, wherein,

in the first group information, priorities of information corresponding to the CSI-RS resources in the M CSI-RS resources are determined according to priorities of the CSI-RS resources; and/or
in the second group information, priorities of information corresponding to the CSI-RS resources in the M CSI-RS resources are determined according to priorities of the CSI-RS resources; and/or
in the third group information, priorities of information corresponding to the CSI-RS resources in the M CSI-RS resources are determined according to priorities of the CSI-RS resources.

19. The method according to supplement 13 or 14, wherein,
the determining a CSI reporting priority at least based on grouping information of reporting domain information of channel state information part II (CSI part II) includes:

that a priority of the *zero-th* group information (G0) is highest,
that a priority of first group information (G10~GM0) and a priority of second group information (G11~GM1) to which a *(j+1)-th* resource in the M CSI-RS resources corresponds are higher than a priority of first group information (G10~GM0) and a priority of second group information (G11~GM1) to which a *(j-1)-th* resource in the M CSI-RS resources corresponds, where, $1 \leq j \leq M$; and
that a priority of first group information (G10~GM0) to which the *j-th* resource corresponds is higher than a priority of second group information (G11~GM1) to which the *j-th* resource corresponds.

20. The method according to supplement 15 or 16, wherein,
the determining a CSI reporting priority at least based on grouping information of reporting domain information of channel state information part II (CSI part II) includes:

that a priority of the *zero-th* group information (G0) is highest,
that a priority of first group information (G10~GM0), a priority of second group information (G11~GM1) and a priority of third group information (G12~GM2) to which a *(j+1)-th* resource in the M CSI-RS resources corresponds are higher than a priority of first group information (G10~GM0), a priority of second group information (G11~GM1) and a priority of third group information (G12~GM2) to which a *(j-1)-th* resource in the M CSI-RS resources corresponds, where, $1 \leq j \leq M$; and
that a priority of first group information (G10~GM0) to which the *j-th* resource corresponds is higher than a priority of second group information (G11~GM1) to which the *j-th* resource corresponds, and the priority of the second group information (G12~GM2) is higher than a priority of third group information (G12~GM2).

21. The method according to supplement 1, wherein that the M CSI-RS resources are related to the K CSI-RS resources includes:
that the M CSI-RS resources are M CSI-RS resources in the K CSI-RS resources.
22. The method according to supplement 21, wherein,
the M CSI-RS resources are related to the K CSI-RS resources based on:

former M resources with maximum reference signal received power (RSRP); and/or,
N resources with RSRP greater than or equal to a predetermined threshold; and/or,
former M resources with minimum block error rates (BLERs); and/or,
M resources with BLERs less than or equal to a predetermined threshold.

## Claims

1.  An apparatus for transmitting channel state information, applicable to a terminal equipment, the apparatus comprising:

a first receiver configured to receive first channel state information reference signal (CSI-RS) resource configuration transmitted by a network device, the first CSI-RS resource configuration at least comprising a first resource set, the first resource set comprising K CSI-RS resources, where, K is a natural number greater than or equal to 2; and

a first processor configured to determine a CSI reporting priority at least based on grouping information of reporting domain information of channel state information part II (CSI part II), the grouping information being determined based on M CSI-RS resources related to the K CSI-RS resources, where, M is a natural number less than or equal to K,

wherein the first processor generates CSI at least according to the CSI reporting priority.

2. The apparatus according to claim 1, wherein the generating CSI at least according to the CSI reporting priority comprises:
omitting a part of the CSI.

3. The apparatus according to claim 1, wherein,
the grouping information comprises: first group (G0) information, second group (G1) information, and third group (G2) information.

4. The apparatus according to claim 3, wherein,

when a codebook type of the channel state information part II is configured as mode 1,
the first group information comprises a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information comprises indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or former Y1 high-priority codebook parameters for determining differential amplitude combining coefficients of the CSI-RS resources in the M CSI-RS resources, and/or former Z1 high-priority codebook parameters for determining phase combining coefficients of the CSI-RS resources in the M CSI-RS resources, where, X1, Y1 and Z1 are all natural numbers; and/or
the third group information comprises latter X2 low-priority non-zero coefficients for determining the CSI-RS resources in the M CSI-RS resources, and/or latter Y2 low-priority codebook parameters for determining differential amplitude combining coefficients of the CSI-RS resources in the M CSI-RS resources, and/or latter Z2 low-priority codebook parameters for determining phase combining coefficients of the CSI-RS resources in the M CSI-RS resources, where, X2, Y2 and Z2 are all natural numbers.

5. The apparatus according to claim 3, wherein,

when a codebook type of the channel state information part II is configured as mode 1,
the first group information comprises a codebook parameter for determining a spatial domain beam selection result to which CSI-RS resources in the M CSI-RS resources correspond, and/or a codebook parameter for determining a strongest coefficient selection result to which the M CSI-RS resources correspond;
the second group information comprises indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former [M/2] CSI-RS resources; and/or
the third group information comprises a differential amplitude combining coefficient and/or a non-zero coefficient and/or a phase combining coefficient codebook parameter for determining CSI-RS resources in latter [M/2] CSI-RS resources.

6. The apparatus according to claim 3, wherein,

when a codebook type of the channel state information part II is configured as mode 2,
the first group information comprises a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information comprises indication information for determining common frequency domain basis vectors of the M CSI-RS resources, and/or former X3 high-priority non-zero coefficients for determining the CSI-RS resources in the M CSI-RS resources, and/or reference combining coefficients for determining the M CSI-RS resources, and/or former Y3 high-priority codebook parameters for determining differential amplitude combining coefficients of the CSI-RS resources in the M CSI-RS resources, and/or former Z3 high-priority codebook parameters for determining phase combining coefficients of the CSI-RS resources in the M CSI-RS resources, where, X3, Y3 and Z3 are all natural numbers; and/or

the third group information comprises latter X4 low-priority non-zero coefficients for determining indication information of frequency domain basis vectors of the CSI-RS resources in the M CSI-RS resources, and/or latter Y4 low-priority codebook parameters for determining differential amplitude combining coefficients of the CSI-RS resources in the M CSI-RS resources, and/or latter Z4 low-priority codebook parameters for determining phase combining coefficients of the CSI-RS resources in the M CSI-RS resources, where, X4, Y4 and Z4 are all natural numbers.

7. The apparatus according to claim 3, wherein,

when a codebook type of the channel state information part II is configured as mode 2,
the first group information comprises a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information comprises indication information for determining common frequency domain basis vectors of the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former [M/2] CSI-RS resources; and/or
the third group information comprises a differential amplitude combining coefficient and/or a non-zero coefficient and/or a phase combining coefficient codebook parameter for determining CSI-RS resources in latter [M/2] CSI-RS resources.

8. The apparatus according to claim 1, wherein,
the grouping information comprises *zero-th* group information (G0) determined based on the M CSI-RS resources, and M pieces of first group information (G10~GM0), M pieces of second group information (G11~GM1) and M pieces of third group information (G12~GM2) determined based on the resources in the M CSI-RS resources.

9. The apparatus according to claim 3, wherein,
the determining a CSI reporting priority at least based on grouping information of reporting domain information of channel state information part II (CSI part II) comprises:

that priorities of first group information to which all CSI-RS resources in the M CSI-RS resources correspond respectively are higher than priorities of second group information to which all CSI-RS resources in the M CSI-RS resources correspond respectively, and
that priorities of second group information to which all CSI-RS resources in the M CSI-RS resources correspond respectively are higher than priorities of third group information to which all CSI-RS resources in the M CSI-RS resources correspond respectively.

10. The apparatus according to claim 8, wherein,
the determining a CSI reporting priority at least based on grouping information of reporting domain information of channel state information part II (CSI part II) comprises:

that a priority of the *zero-th* group information (G0) is highest,
that a priority of first group information (G10~GM0), a priority of second group information (G11~GM1) and a priority of third group information (G12~GM2) to which a *(j+1)-th* resource in the M CSI-RS resources corresponds are higher than a priority of first group information (G10~GM0), a priority of second group information (G11~GM1) and a priority of third group information (G12~GM2) to which a *(j-1)-th* resource in the M CSI-RS resources corresponds, where, $1 \leq j \leq M$; and
that a priority of first group information (G10~GM0) to which a *j-th* resource corresponds is higher than a priority of second group information (G11~GM1) to which the *j-th* resource corresponds, and the priority of the second group information (G12~GM2) is higher than a priority of third group information (G12~GM2).

11. An apparatus for transmitting channel state information, applicable to a network device, the apparatus comprising:

a second transmitter configured to transmit first channel state information reference signal (CSI-RS) resource configuration to a terminal equipment, the first CSI-RS resource configuration at least comprising a first resource set, the first resource set comprising K CSI-RS resources, where, K is a natural number greater than or equal to 2; and

a second receiver configured to receive CSI from the terminal equipment, the CSI being generated according to a CSI reporting priority,

wherein the CSI reporting priority is determined at least based on grouping information of reporting domain information of channel state information part II (CSI part II), the grouping information being determined based on M CSI-RS resources related to the K CSI-RS resources, where, M is a natural number less than or equal to K.

12. The apparatus according to claim 11, wherein,
the CSI received by the second receiver is obtained by omitting a part of the CSI by the terminal equipment.

13. The apparatus according to claim 11, wherein,
the grouping information comprises: first group (G0) information, second group (G1) information, and third group (G2) information.

14. The apparatus according to claim 13, wherein,

when a codebook type of the channel state information part II is configured as mode 1,
the first group information comprises a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information comprises indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or former Y1 high-priority codebook parameters for determining differential amplitude combining coefficients of the CSI-RS resources in the M CSI-RS resources, and/or former Z1 high-priority codebook parameters for determining phase combining coefficients of the CSI-RS resources in the M CSI-RS resources, where, X1, Y1 and Z1 are all natural numbers; and/or
the third group information comprises latter X2 low-priority non-zero coefficients for determining the CSI-RS resources in the M CSI-RS resources, and/or latter Y2 low-priority codebook parameters for determining differential amplitude combining coefficients of the CSI-RS resources in the M CSI-RS resources, and/or latter Z2 low-priority codebook parameters for determining phase combining coefficients of the CSI-RS resources in the M CSI-RS resources, where, X2, Y2 and Z2 are all natural numbers.

15. The apparatus according to claim 13, wherein,

when a codebook type of the channel state information part II is configured as mode 1,
the first group information comprises a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information comprises indication information for determining frequency domain basis vectors of the CSI-RS resources in the M CSI-RS resources, and/or former X1 high-priority non-zero coefficients for determining the CSI-RS resources in the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former $[M/2]$ CSI-RS resources; and/or
the third group information comprises a differential amplitude combining coefficient and/or a non-zero coefficient and/or a phase combining coefficient codebook parameter for determining CSI-RS resources in latter $[M/2]$ CSI-RS resources.

16. The apparatus according to claim 13, wherein,

when a codebook type of the channel state information part II is configured as mode 2,
the first group information comprises a codebook parameter for determining a spatial domain beam selection result to which CSI-RS resources in the M CSI-RS resources correspond, and/or a codebook parameter for determining a strongest coefficient selection result to which the M CSI-RS resources correspond; and/or

the second group information comprises indication information for determining common frequency domain basis vectors of the M CSI-RS resources, and/or former X3 high-priority non-zero coefficients for determining the CSI-RS resources in the M CSI-RS resources, and/or reference combining coefficients for determining the M CSI-RS resources, and/or former Y3 high-priority codebook parameters for determining differential amplitude combining coefficients of the CSI-RS resources in the M CSI-RS resources, and/or former Z3 high-priority codebook parameters for determining phase combining coefficients of the CSI-RS resources in the M CSI-RS resources, where, X3, Y3 and Z3 are all natural numbers; and/or

the third group information comprises latter X4 low-priority non-zero coefficients for determining indication information of frequency domain basis vectors of the CSI-RS resources in the M CSI-RS resources, and/or latter Y4 low-priority codebook parameters for determining differential amplitude combining coefficients of the CSI-RS resources in the M CSI-RS resources, and/or latter Z4 low-priority codebook parameters for determining phase combining coefficients of the CSI-RS resources in the M CSI-RS resources, where, X4, Y4 and Z4 are all natural numbers.

17. The apparatus according to claim 13, wherein,

when a codebook type of the channel state information part II is configured as mode 2,
the first group information comprises a codebook parameter for determining a spatial domain beam selection result to which CSI-RS resources in the M CSI-RS resources correspond, and/or a codebook parameter for determining a strongest coefficient selection result to which the M CSI-RS resources correspond; and/or
the second group information comprises indication information for determining common frequency domain basis vectors of the M CSI-RS resources, and/or reference combining coefficients for determining the M CSI-RS resources, and/or a differential amplitude combining coefficient and/or a non-zero coefficient and/or a phase combining coefficient codebook parameter for determining CSI-RS resources in former $[M/2]$ CSI-RS resources; and/or
the third group information comprises a differential amplitude combining coefficient and/or a non-zero coefficient and/or a phase combining coefficient codebook parameter for determining CSI-RS resources in latter $[M/2]$ CSI-RS resources.

18. The apparatus according to claim 11, wherein,
the grouping information comprises *zero-th* group information (GO) determined based on the M CSI-RS resources, and M pieces of first group information (G10~GM0), M pieces of second group information (G11~GM1) and M pieces of third group information (G12~GM2) determined based on the resources in the M CSI-RS resources.

19. The apparatus according to claim 13, wherein,
the determining a CSI reporting priority at least based on grouping information of reporting domain information of channel state information part II (CSI part II) comprises:

that priorities of first group information to which all CSI-RS resources in the M CSI-RS resources correspond respectively are higher than priorities of second group information to which all CSI-RS resources in the M CSI-RS resources correspond respectively, and
that priorities of second group information to which all CSI-RS resources in the M CSI-RS resources correspond respectively are higher than priorities of third group information to which all CSI-RS resources in the M CSI-RS resources correspond respectively.

20. The apparatus according to claim 18, wherein,
the determining a CSI reporting priority at least based on grouping information of reporting domain information of channel state information part II (CSI part II) comprises:

that a priority of the *zero-th* group information (G0) is highest,
that a priority of first group information (G10~GM0), a priority of second group information (G11~GM1) and a priority of third group information (G12~GM2) to which a *(j+1)-th* resource in the M CSI-RS resources corresponds are higher than a priority of first group information (G10~GM0), a priority of second group information (G11~GM1) and a priority of third group information (G12~GM2) to which a *(j-1)-th* resource in the M CSI-RS resources corresponds, where, $1 \leq j \leq M$; and
that a priority of first group information (G10~GM0) to which a *j-th* resource corresponds is higher than a priority of second group information (G11~GM1) to which the *j-th* resource corresponds, and the priority of the second group information (G12~GM2) is higher than a priority of third group information (G12~GM2).

**FIG. 1**

100

201

202

## FIG. 2

| reporting setting 0 | Resource setting 0 (NZP CSI-RS) |
|---|---|
| reporting setting 1 | Resource setting 1 (CSI-IM) |
| | Resource setting 2 (NZP CSI-RS) |

## FIG. 3

**401**

the terminal equipment receives first channel state information reference signal (CSI-RS) resource configuration transmitted by a network device, the first CSI-RS resource configuration at least including a first resource set, the first resource set comprising K CSI-RS resources, where, K is a natural number greater than or equal to 2

**402**

the terminal equipment determines a CSI reporting priority at least based on grouping information of reporting domain information of channel state information part II (CSI part II), the grouping information being determined based on M CSI-RS resources related to the K CSI-RS resources, where, M is a natural number less than or equal to K

**403**

the terminal equipment generates CSI at least according to the CSI reporting priority

# FIG. 4

501

the network device transmits first channel state information reference signal (CSI-RS) resource configuration to a terminal equipment, the first CSI-RS resource configuration at least comprising a first resource set, the first resource set comprising K CSI-RS resources, where, K is a natural number greater than or equal to 2

502

the network device receives CSI from the terminal equipment, the CSI being generated according to a CSI reporting priority, wherein the CSI reporting priority is determined at least based on grouping information of reporting domain information of channel state information part II (CSI part II), the grouping information being determined based on M CSI-RS resources related to the K CSI-RS resources, where, M is a natural number less than or equal to K

# FIG. 5

600

Apparatus for transmitting
channel state information

601

First receiver

602

First processor

603

First transmitter

## FIG. 6

700

Apparatus for receiving
channel state information

701

Second receiver

702

Second transmitter

## FIG. 7

800

**Terminal equipment**

810

830

840 — Input unit

Processor

Communication module (transmitter/ receiver)

820 —

Memory
Buffer
App/function
Data
Program

Display — 850

Power supply — 860

**FIG. 8**

900

**Network device**

920

910

950

Memory

930

Program

Processor

940

Transceiver

**FIG. 9**

## INTERNATIONAL SEARCH REPORT

| International application No. |
| --- |
| **PCT/CN2023/076849** |

| A. | CLASSIFICATION OF SUBJECT MATTER |
| --- | --- |

H04L5/00(2006.01)i;  H04W24/10(2009.01)i

According to International Patent Classification (IPC) or to both national classification and IPC

| B. | FIELDS SEARCHED |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, WPABS, ENTXTC, 3GPP: 信道状态信息, 资源, 联合传输, 上报, 汇报, 反馈, 优先级, 省略, 丢弃, 放弃, 忽略, 分组, 部分, 多TRP, CSI, CSI RS, resource, joint transmission, CJT, NCJT, coherent, report, priorit+, omit, omission, group+, part, Multi TRP, mTRP

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 115053561 A (QUALCOMM INC.) 13 September 2022 (2022-09-13)<br>claims 1-30, and description, paragraphs [0056]-[0219] | 1-20 |
| Y | CN 112655170 A (QUALCOMM INC.) 13 April 2021 (2021-04-13)<br>description, paragraphs [0075]-[0109] | 1-20 |
| A | CN 111385073 A (SPREADTRUM SEMICONDUCTOR (NANJING) CO., LTD.) 07 July 2020 (2020-07-07)<br>entire document | 1-20 |
| A | WO 2020225642 A1 (TELEFONAKTIEBOLAGET LM ERICSSON (PUBL)) 12 November 2020 (2020-11-12)<br>entire document | 1-20 |
| A | 3GPP. "3rd Generation Partnership Project; Technical Specification Group Radio Access Network: NR: Multiplexing and channel coding (Release 17)"<br>*3GPP TS 38.212 V17.4.0 (2022-12)*. 04 January 2023 (2023-01-04),<br>section 6.3.2.1.2 | 1-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 October 2023** | **19 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 668 637 A1**

## INTERNATIONAL SEARCH REPORT

| | International application No. |
|---|---|
| | **PCT/CN2023/076849** |

| C. | DOCUMENTS CONSIDERED TO BE RELEVANT | | |
|---|---|---|
| Category* | Citation of document, with indication, where appropriate, of the relevant passages | Relevant to claim No. |
| T | FUJITSU. "Views on CSI enhancement for coherent-JT and mobility" *3GPP TSG RAN WG1 #112 R1-2300741*, 17 February 2023 (2023-02-17), entire document | 1-20 |

Form PCT/ISA/210 (second sheet) (July 2022)

**INTERNATIONAL SEARCH REPORT**
Information on patent family members

International application No.

**PCT/CN2023/076849**

| Patent document cited in search report | | | Publication date (day/month/year) | Patent family member(s) | | | Publication date (day/month/year) |
|---|---|---|---|---|---|---|---|
| CN | 115053561 | A | 13 September 2022 | US | 2023071931 | A1 | 09 March 2023 |
| | | | | EP | 4104502 | A1 | 21 December 2022 |
| | | | | WO | 2021160180 | A1 | 19 August 2021 |
| | | | | WO | 2021159462 | A1 | 19 August 2021 |
| CN | 112655170 | A | 13 April 2021 | WO | 2020052428 | A1 | 19 March 2020 |
| | | | | WO | 2020051922 | A1 | 19 March 2020 |
| | | | | EP | 3850777 | A1 | 21 July 2021 |
| | | | | US | 2021328742 | A1 | 21 October 2021 |
| CN | 111385073 | A | 07 July 2020 | | None | | |
| WO | 2020225642 | A1 | 12 November 2020 | JP | 2022531320 | A | 06 July 2022 |
| | | | | KR | 20220003071 | A | 07 January 2022 |
| | | | | EP | 3963736 | A1 | 09 March 2022 |
| | | | | US | 2022239360 | A1 | 28 July 2022 |
| | | | | CN | 113785501 | A | 10 December 2021 |

Form PCT/ISA/210 (patent family annex) (July 2022)